# EUROPEAN PATENT APPLICATION

(11) **EP 1 695 987 A1**
(43) Date of publication of application: **30.08.2006**
(21) Application number: 06003800.7
(22) Date of filing: 24.02.2006
(51) Int. Cl.: C08F 8/00, C08L 19/00, C08J 3/24, C08C 19/22

(54) **Thermoplastic elastomer composition**

(30) Priority: 24.02.2005 JP 2005048573; 06.09.2005 JP 2005258243
(71) Applicant: THE YOKOHAMA RUBBER CO., LTD., Tokyo 105-8685 (JP)
(72) Inventor: Chino, Keisuke c/o The Yokohama Rubber Co.,Ltd., Hiratsuka City, Kanagawa 254-8601 (JP); Sakai, Tomoyuki c/o The Yokohama Rubber Co.,Ltd., Hiratsuka City, Kanagawa 254-8601 (JP); Kakubo, Takashi c/o The Yokohama Rubber Co.,Ltd., Hiratsuka City, Kanagawa 254-8601 (JP)
(74) Representative: Vossius & Partner

(57) **Abstract**

Disclosed is a thermoplastic elastomer composition including a thermoplastic elastomer (A) having a side chain having at least one member selected from the group consisting of imino group, nitrogen-containing heterocycle and covalent crosslink site, and a carbonyl-containing group, and an ethylene-propylene copolymer (B) comprising propylene block and ethylene-propylene block. The thermoplastic elastomer of the present invention exhibits excellent high temperature flowability and mechanical strength while retaining its excellent flexibility.

## Description

This invention relates to a thermoplastic elastomer composition, and more specifically, to a thermoplastic elastomer composition containing a thermoplastic elastomer which has the property of repetitively and reproducibly undergoing crosslinking and de-crosslinking by changing temperature (hereinafter sometimes referred to as "recyclability").

Recycling of the once used materials is an urgent agenda in these days for environmental protection, resources saving, and other considerations. Crosslinked rubbers (vulcanized rubbers) have a stable three-dimensional network structure formed by covalent bonding of the macromolecular substance and the crosslinking agent (vulcanizer), and accordingly, very high strength. Re-molding of such material, however, is difficult due to the crosslinking by the strong covalent bonding. On the other hand, thermoplastic elastomers utilize physical crosslinking, and molding of such material is readily accomplished by heat melting the material with no complicated vulcanization or molding steps including the premolding.

A typical thermoplastic elastomer is a thermoplastic elastomer containing a resin component and a rubber component, in which the microcrystalline resin component constitutes the hard segment acting as the crosslink moiety for the three-dimensional network structure thereby preventing plastic deformation of the rubber component (soft segment) at room temperature, and in which the softening or melting of the resin component realizes plastic deformation of the elastomer at an elevated temperature. Such thermoplastic elastomer containing the resin component, however, often suffers from the loss of rubber elasticity, and therefore, a material to which thermoplasticity can be imparted and which is free from such resin component is highly demanded.

In view of such situation, the inventors of the present invention have already found that a thermoplastic elastomer which is crosslinkable by hydrogen bond, comprising an elastomeric polymer having a carbonyl-containing group and a heterocyclic amine-containing group in its side chain can repetitively undergo crosslinking and de-crosslinking by changing temperature through the use of the hydrogen bond. Based on such finding, the inventors proposed a thermoplastic elastomer which is crosslinkable by hydrogen bond comprising an elastomeric polymer having (i) a carbonyl-containing group and (ii) a heterocyclic amine-containing group in its side chain; and a method for the production of such thermoplastic elastomer, comprising reacting an elastomeric polymer having a cyclic acid anhydride group in its side chain and a heterocyclic amine-containing compound at a temperature allowing the heterocyclic amine-containing compound to chemically bind with the cyclic acid anhydride group to thereby produce the thermoplastic elastomer. (See, for example, JP 2000-169527 A.)

The thermoplastic elastomer having such properties has enormous industrial and environmental value, and such material is also expected as a material having improved higher strength after crosslinking and excellent recyclability without change in its physical properties even after repetitive crosslinking and de-crosslinking.

The thermoplastic elastomer described in JP 2000-169527 A, however, sometimes sacrificed the excellent flexibility inherent in the thermoplastic elastomer and it also suffered from the loss of high temperature flowability when a filler, polypropylene, and the like were incorporated in the composition.

It has also been found that, when an uncrosslinked ethylene-propylene rubber (EPM) is incorporated for the purpose of improving the high temperature flowability, the composition undergoes loss of mechanical strength despite the improvement in the flowability.

When used in a composition also including a filler and the like, the thermoplastic elastomer described in JP 2000-169527 A was still insufficient in the mechanical strength, and in particular, in the resistance to compression set after having been compressed for a predetermined time.

In view of the situation as described above, a first object of the present invention is to provide a thermoplastic elastomer composition which exhibits excellent high temperature flowability and mechanical strength while retaining its excellent flexibility.

A second object of the present invention is to provide a thermoplastic elastomer composition which exhibits excellent mechanical strength, and in particular, excellent resistance to compression set while retaining its excellent recyclability.

The inventors of the present invention have made an intensive study to achieve the first object, and as a result found that a thermoplastic elastomer composition comprising a thermoplastic elastomer having a side chain containing a particular structure and a particular ethylene-propylene copolymer exhibits excellent high temperature flowability and mechanical strength while maintaining the excellent flexibility. The first aspect of the present invention is based on such a finding.

Accordingly, the first aspect of the present invention provides the thermoplastic elastomer composition described in the following (1) to (17).
(1) A thermoplastic elastomer composition comprising a thermoplastic elastomer (A) having a side chain having (a) at least one member selected from the group consisting of an imino group, nitrogen-containing heterocycle and covalent crosslink site, and (b) a carbonyl-containing group, and an ethylene-propylene copolymer (B) comprising apropyleneblock and an ethylene-propylene block.
(2) The thermoplastic elastomer composition according to the above (1), wherein the ethylene-propylene copolymer (B) contains 1 to 50% by mole of the propylene block.
(3) The thermoplastic elastomer composition according to the above (1) or (2), wherein the propylene block is stereoregular.
(4) The thermoplastic elastomer composition according to the above (3), wherein the propylene block is isotactic.
(5) The thermoplastic elastomer composition according to any one of the above (1) to (4), wherein content of the ethylene-propylene copolymer (B) is 1 to 200 parts by mass in relation to 100 parts by mass of the thermoplastic elastomer (A).
(6) The thermoplastic elastomer composition according to any one of the above (1) to (5), wherein the side chain of the thermoplastic elastomer (A) has a structure represented by the following formula (1): 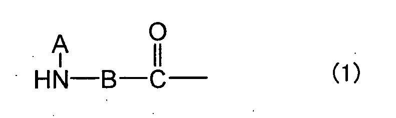 wherein A is an alkyl group containing 1 to 30 carbon atoms, an aralkyl group containing 7 to 20 carbon atoms, or an aryl group containing 6 to 20 carbon atoms; and B is a single bond, oxygen atom, amino group NR' (wherein R' is a hydrogen atom or an alkyl group containing 1 to 10 carbon atoms), sulfur atom, or an organic group optionally containing such atom or group.
(7) The thermoplastic elastomer composition according to the above (6), wherein the side chain containing the structure represented by the formula (1) has a structure represented by the following formula (2) or (3) which binds to the main chain at α or β position: 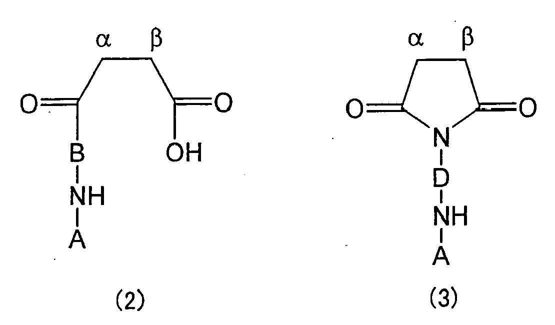 wherein A is an alkyl group containing 1 to 30 carbon atoms, an aralkyl group containing 7 to 20 carbon atoms, or an aryl group containing 6 to 20 carbon atoms; and B and D are independently a single bond, oxygen atom, amino group NR' (wherein R' is a hydrogen atom or an alkyl group containing 1 to 10 carbon atoms), sulfur atom, or an organic group optionally containing such atom or group.
(8) The thermoplastic elastomer composition according to any one of the above (1) to (5), wherein the side chain of the thermoplastic elastomer (A) contains the structure represented by the following formula (4): 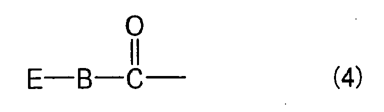 wherein E is a nitrogen-containing heterocycle, and B is a single bond, oxygen atom, amino group NR' (wherein R' is a hydrogen atom or an alkyl group containing 1 to 10 carbon atoms), sulfur atom, or an organic group optionally containing such atom or group.
(9) The thermoplastic elastomer composition according to the above (8), wherein the side chain containing the structure represented by the formula (4) has a structure represented by the following formula (5) or (6) which binds to the main chain at α or β position: 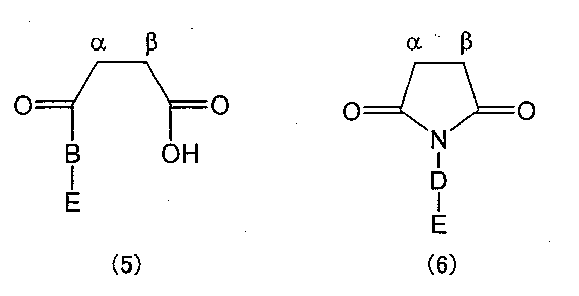 wherein E is a nitrogen-containing heterocycle, and B and D are independently a single bond, oxygen atom, amino group NR'(whereinR'isa hydrogen atom or an alkyl group containing 1 to 10 carbon atoms), sulfur atom, or an organic group optionally containing such atom or group.
   The nitrogen-containing heterocycle is preferably a five-membered or six-membered ring.
   The nitrogen-containing heterocycle is preferably a triazole ring, thiadiazole ring, pyridine ring, thiazole ring, imidazole ring, or hydantoin ring.
(10) The thermoplastic elastomer composition according to any one of the above (1) to (9), wherein, in the covalent crosslink site, a crosslink can be formed by at least one bond selected from the group consisting of amide, ester, lactone, urethane, ether, thiourethane, and thioether.
(11) The thermoplastic elastomer composition according to any one of the above (1) to (9), wherein, in the covalent crosslink site, a crosslink is formed by at least one bond selected from the group consisting of amide, ester, lactone, urethane, ether, thiourethane, and thioether.
   The crosslink in the covalent crosslink site preferably contains a tertiary amino group
(12) The thermoplastic elastomer composition according to the above (11), wherein the crosslink in the covalent crosslink site has at least one structure represented by any one of the following formulae (7) to (9): 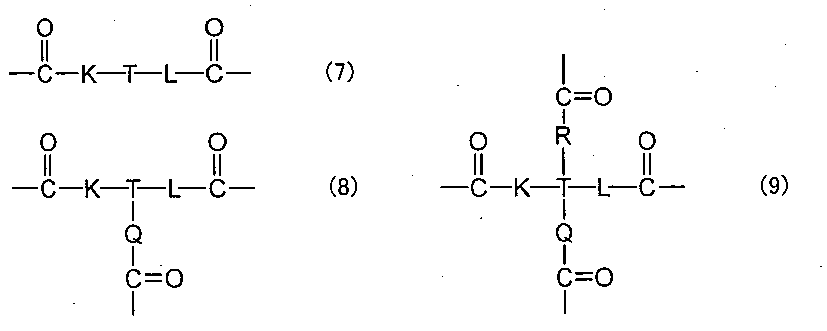 wherein K, L, Q, and R are independently a single bond, oxygen atom, amino group NR' (wherein R' is a hydrogen atom or an alkyl group containing 1 to 10 carbon atoms), sulfur atom, or an organic group optionally containing such atom or group, and T is a hydrocarbon group preferably containing 1 to 1000 carbon atoms, more preferably containing 1 to 100 carbon atoms and further more preferably 1 to 20 carbon atoms which may contain an oxygen atom, sulfur atom or nitrogen atom and which may be branched.
(13) The thermoplastic elastomer composition according to the above (12), wherein the crosslink in the covalent crosslink site has at least one structure represented by any one of the following formulae (10) to (12) which binds to the main chain at α or β position: 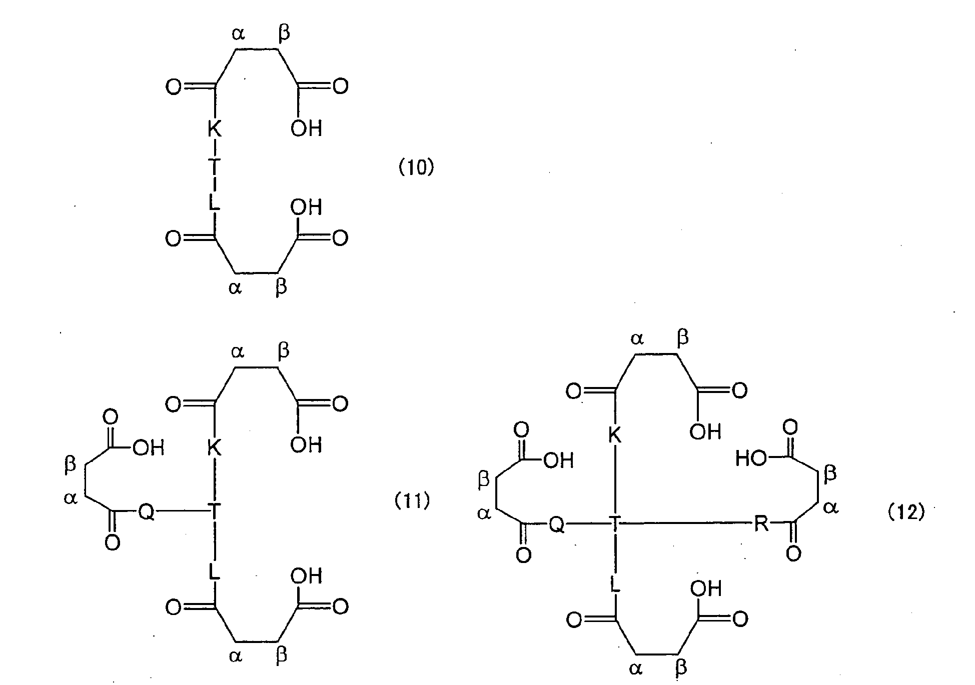 wherein K, L, Q, and R are independently a single bond, oxygen atom, amino group NR' (wherein R' is a hydrogen atom or an alkyl group containing 1 to 10 carbon atoms), sulfur atom, or an organic group optionally containing such atom or group, and T is a hydrocarbon group preferably containing 1 to 1000 carbon atoms, more preferably containing 1 to 100 carbon atoms and further more preferably 1 to 20 carbon atoms which may contain anoxygen atom, sulfur atom or nitrogen atom and which may be branched.
   T in any one of the formulae (7) to (12) preferably containsa tertiary amino group.
   The crosslink in the covalent crosslink site is preferably formed by a reaction of a cyclic acid anhydride group with hydroxy group, or amino group and/or imino group.
   The side chain containing the structure represented by the formula (4) preferably has a structure represented by the following formula (13), following formula (14) or (15), or the following formula (16): 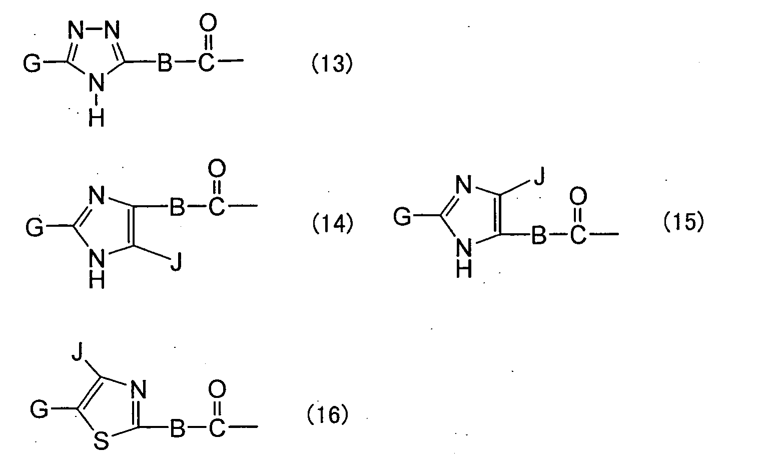 wherein B is a single bond, oxygen atom, amino group NR' (wherein R' is a hydrogen atom or an alkyl group containing 1 to 10 carbon atoms), sulfur atom, or an organic group optionally containing such atom or group, and G and J are independently hydrogen atom, an alkyl group containing 1 to 30 carbon atoms, aralkyl group containing 7 to 20 carbon atoms, or an aryl group containing 6 to 20 carbon atoms.
   The side chain containing the structure represented by the formula (4) preferably has a structure represented by the following formula (17) or (18), any one of the following formulae (19) to (22), or the following formula (23) or (24) which binds to the main chain at α or β position: 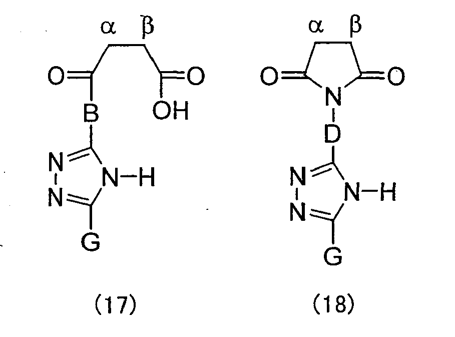 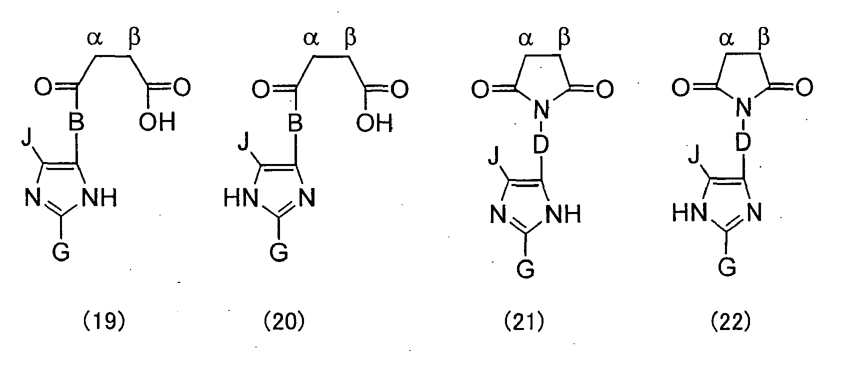 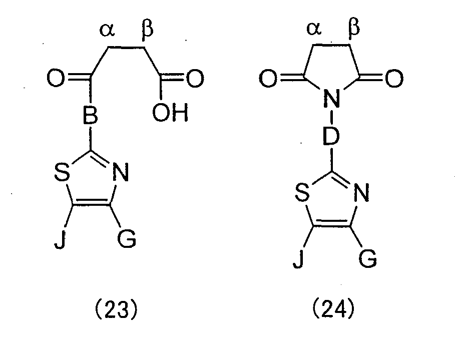 wherein B and D are independently a single bond, oxygen atom, amino group NR' (wherein R' is a hydrogen atom or an alkyl group containing 1 to 10 carbon atoms), sulfur atom, or an organic group optionally containing such atom or group, and G and J are independently hydrogen atom, an alkyl group containing 1 to 30 carbon atoms, aralkyl group containing 7 to 20 carbon atoms, or an aryl group containing 6 to 20 carbon atoms.
(14) The thermoplastic elastomer composition according to any one of the above (1) to (13), further comprising a styrene thermoplastic elastomer.
   The styrene content of the styrene thermoplastic elastomer is preferably 10 to 60% by mass.
(15) The thermoplastic elastomer composition according to the above (14), wherein the content of the styrene thermoplastic elastomer is 1 to 500 parts by mass in relation to 100 parts by mass of the thermoplastic elastomer (A).
(16) The thermoplastic elastomer composition according to any one of the above (1) to (15), further comprising a filler.
(17) The thermoplastic elastomer composition according to the above (16), wherein the content of the filler is 1 to 200 parts by mass in relation to 100 parts by mass of the thermoplastic elastomer (A).
   The inventors of the present invention have made an intensive study to achieve the second object, and as a result found that a thermoplastic elastomer composition comprising a thermoplastic elastomer having a side chain containing a particular structure, a particular styrene thermoplastic elastomer and a plasticizer exhibits excellent physical properties such as mechanical strength and resistance to compression set while maintaining the excellent recyclability. The second aspect of the present invention is based on such a finding. Accordingly, the second aspect of the present invention provides the thermoplastic elastomer composition described in the following (18) to (39).
(18) A thermoplastic elastomer composition comprising a thermoplastic elastomer (A) having a side chain having (a) at least one member selected from the group consisting of an imino group, a nitrogen -containing heterocycle and a covalent crosslink site, and (b) a carbonyl-containing group; a styrene thermoplastic elastomer having a weight average molecular weight of at least 100,000; and a plasticizer.
(19) The thermoplastic elastomer composition according to the above (18), wherein the thermoplastic elastomer (A) has a side chain containing an imino group and/or a nitrogen-containing heterocycle, and a carbonyl-containing group.
(20) The thermoplastic elastomer composition according to the above (18), wherein the side chain contains an imino group and a carbonyl-containing group.
(21) The thermoplastic elastomer composition according to the above (18), wherein the side chain contains an imino group, a nitrogen-containing heterocycle, and a carbonyl-containing group.
(22) The thermoplastic elastomer composition according to any one of the above (18) to (21), wherein the side chain has a structure represented by the following formula (1): 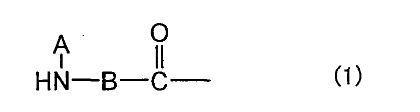 wherein A is an alkyl group containing 1 to 30 carbon atoms, an aralkyl group containing 7 to 20 carbon atoms, or an aryl group containing 6 to 20 carbon atoms; and B is a single bond, oxygen atom, amino group NR' (wherein R' is a hydrogen atom or an alkyl group containing 1 to 10 carbon atoms), sulfur atom, or an organic group optionally containing such atom or group.
(23) The thermoplastic elastomer composition according to the above (22), wherein the side chain containing the structure represented by the formula (1) has a structure represented by the following formula (2) or (3) whichbindstothe main chain at α or β position: 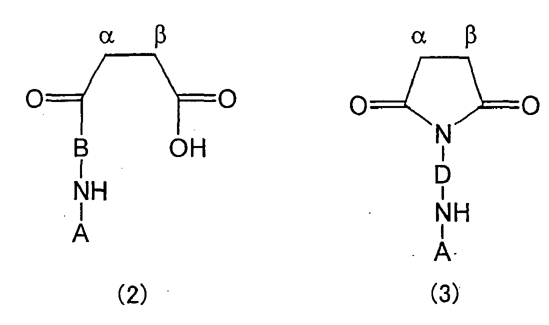 wherein A is an alkyl group containing 1 to 30 carbon atoms, an aralkyl group containing 7 to 20 carbon atoms, or an aryl group containing 6 to 20 carbon atoms; and B and D are independently a single bond, oxygen atom, amino group NR' (wherein R' is a hydrogen atom or an alkyl group containing 1 to 10 carbon atoms), sulfur atom, or an organic group optionally containing such atom or group.
(24) The thermoplastic elastomer composition according to the above (19) or (21), wherein the side chain contains a structure represented by the following formula (4) : 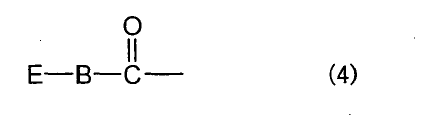 wherein E is a nitrogen-containing heterocycle, and B is a single bond, oxygen atom, amino group NR' (wherein R' is a hydrogen atom or an alkyl group containing 1 to 10 carbon atoms), sulfur atom, or an organic group optionally containing such atom or group.
(25) The thermoplastic elastomer composition according to the above (24), wherein the side chain containing the structure represented by the formula (4) has a structure represented by the following formula (5) or (6) which binds to the main chain at α or β position : 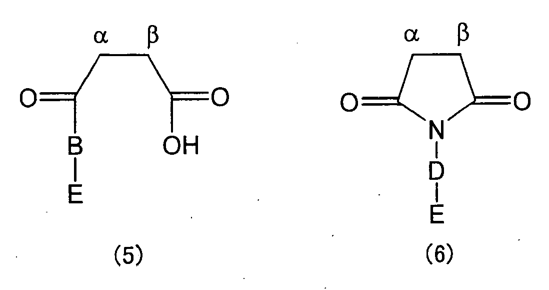 wherein E is a nitrogen-containing heterocycle, and B and D are independently a single bond, oxygen atom, amino group
   NR' (wherein R' is a hydrogen atom or an alkyl group containing 1 to 10 carbon atoms), sulfur atom, or an organic group optionally containing such atom or group.
(26) The thermoplastic elastomer composition according to the above (19), (21), (24), or (25), wherein the nitrogen-containing heterocycle is a five-membered or six-membered ring.
(27) The thermoplastic elastomer composition according to the above (26), wherein the nitrogen-containing heterocycle is a triazole ring, thiadiazole ring, pyridine ring, thiazole ring, imidazole ring, or hydantoin ring.
(28) The thermoplastic elastomer composition according to the above (26), wherein the side chain containing the structure represented by the formula (4) has a structure represented by the following formula (7), the following formula (8) or (9), or the following formula (10) : 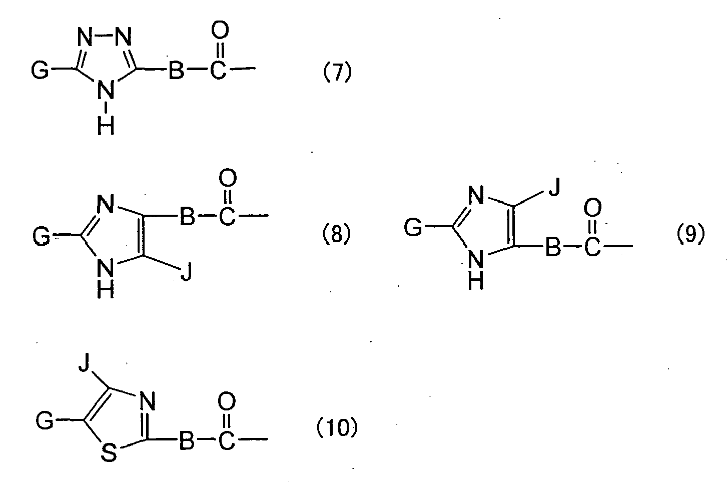 wherein B is a single bond, oxygen atom, amino group NR' (wherein R' is a hydrogen atom or an alkyl group containing 1 to 10 carbon atoms), sulfur atom, or an organic group optionally containing such atom or group, and G and J are independently a hydrogen atom, an alkyl group containing 1 to 30 carbon atoms, an aralkyl group containing 7 to 20 carbon atoms, or an aryl group containing 6 to 20 carbon atoms.
(29) The thermoplastic elastomer composition according to the above (28), wherein the side chain containing the structure represented by the formula (4) has a structure represented by the following formula (11) or (12), any one of the following formulae (13) to (16), or the following formula (17) or (18) which binds to the main chain at α or β position: 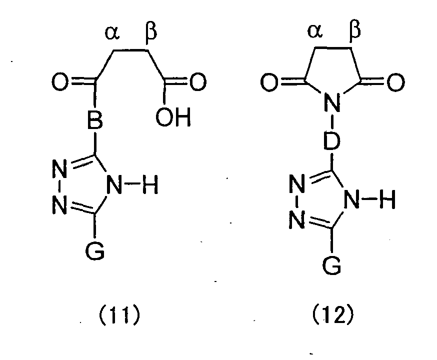 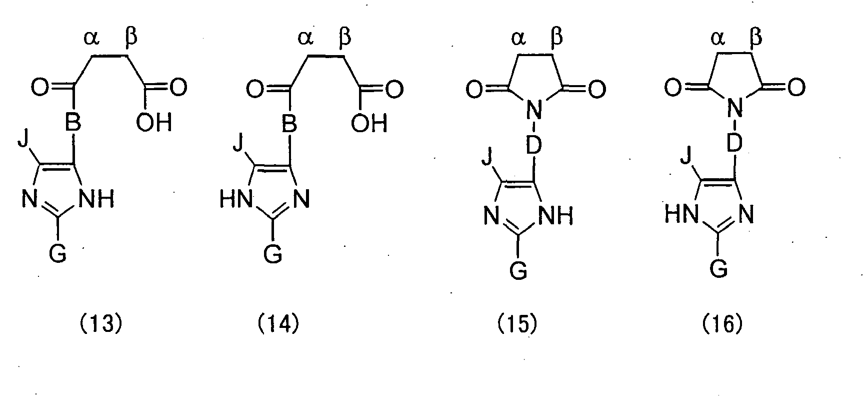 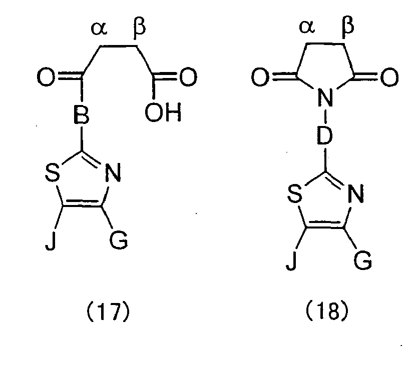 wherein B and D are independently a single bond, oxygen atom, amino group NR' (wherein R' is a hydrogen atom or an alkyl group containing 1 to 10 carbon atoms), sulfur atom, or an organic group optionally containing such atom or group, and G and J are independently hydrogen atom, an alkyl group containing 1 to 30 carbon atoms, aralkyl group containing 7 to 20 carbon atoms, or an aryl group containing 6 to 20 carbon atoms.
(30) The thermoplastic elastomer composition according to any one of the above (18) to (29), wherein the thermoplastic elastomer (A) has another side chain which has a covalent crosslink site, and in the covalent crosslink site, a crosslink can be formed by at least one bond selected from the group consisting of amide, ester, lactone, urethane, ether, thiourethane, and thioether.
(31) The thermoplastic elastomer composition according to any one of the above (18) to (29), wherein the thermoplastic elastomer (A) has another side chain which has a covalent crosslink site, and in the covalent crosslink site, a crosslink is formed by at least one bond selected from the group consisting of amide, ester, lactone, urethane, ether, thiourethane, and thioether.
(32) The thermoplastic elastomer composition according to the above (31), wherein the crosslink in the covalent crosslink site contains a tertiary amino group.
(33) The thermoplastic elastomer composition according to the above (31) or (32), wherein the crosslink in the covalent crosslink site has at least one structure represented by any one of the following formulae (19) to (21) : 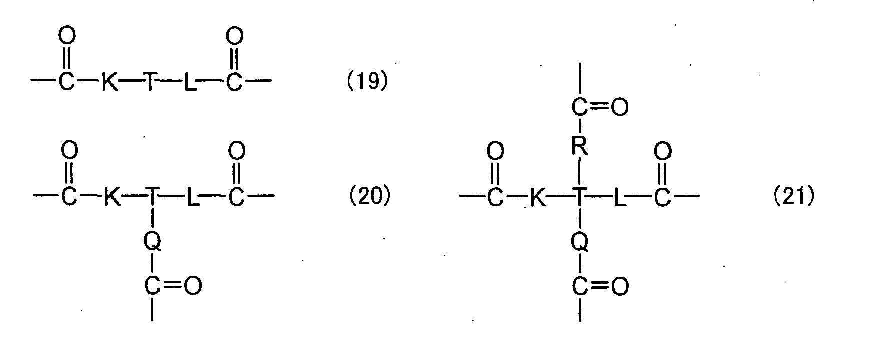 wherein K, L, Q, and R are independently a single bond, oxygen atom, amino group NR' (wherein R' is a hydrogen atom or an alkyl group containing 1 to 10 carbon atoms), sulfur atom, or an organic group optionally containing such atom or group, and T is a hydrocarbon group preferably containing 1 to 1000 carbon atoms, more preferably containing 1 to 100 carbon atoms and further more preferably 1 to 20 carbon atoms which may contain an oxygen atom, sulfur atom or nitrogen atom and which may be branched.
(34) The thermoplastic elastomer composition according to the above (33), wherein the crosslink in the covalent crosslink site has at least one structure represented by any one of the following formulae (22) to (24) which binds to the main chain at α or β position: 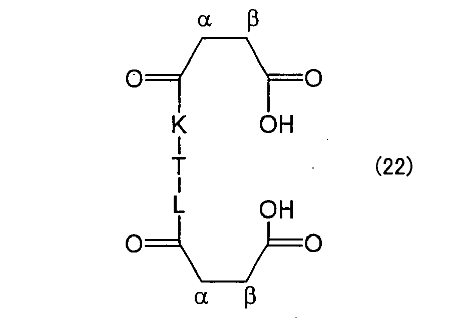 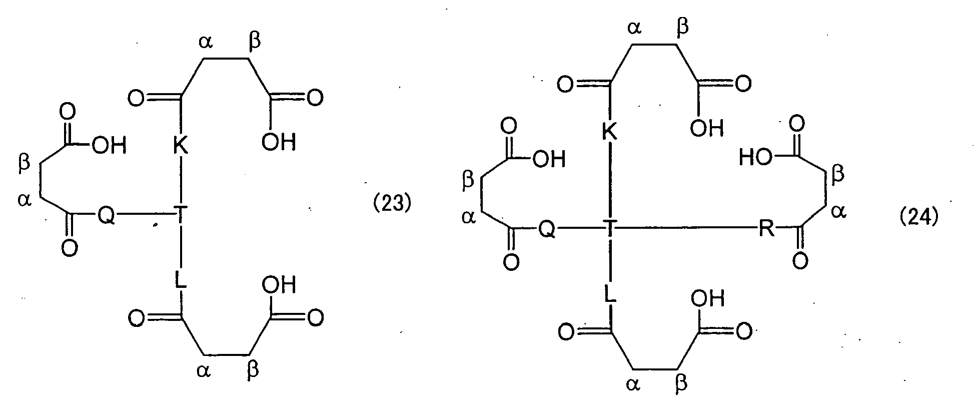 wherein K, L, Q, and R are independently a single bond, oxygen atom, amino group NR' (wherein R' is ahydrogenatom or an alkyl group containing 1 to 10 carbon atoms), sulfur atom, or an organic group optionally containing such atom or group, and T is a hydrocarbon group preferably containing 1 to 1000 carbon atoms, more preferably containing 1 to 100 carbon atoms and further more preferably 1 to 20 carbon atoms which may contain an oxygen atom, sulfur atom or nitrogen atom and which may be branched.
(35) The thermoplastic elastomer composition according to the above (33) or (34), wherein T in any one of the formulae (19) to (24) contains a tertiary amino group,
(36) The thermoplastic elastomer composition according to any one of the above (31) to (35), wherein crosslink in the covalent crosslink site is formed by a reaction of a cyclic acid anhydride group with a hydroxy group, or amino group and/or imino group.
(37) The thermoplastic elastomer composition according to any one of the above (18) to (36), wherein the styrene content of the styrene thermoplastic elastomer is 10 to 60% by mass.
(38) The thermoplastic elastomer composition according to any one of the above (18) to (37), wherein the content of the styrene thermoplastic elastomer is 1 to 500 parts by mass in relation to 100 parts by mass of the thermoplastic elastomer (A).
(39) The thermoplastic elastomer composition according to any one of the above (18) to (38), wherein the content of the plasticizer is 1 to 500 parts by mass in relation to 100 parts by mass of the thermoplastic elastomer (A).

As will be described below, the first aspect of the present invention should be useful since it provides a thermoplastic elastomer composition exhibiting excellent high temperature flowability and mechanical strength without detracting from the excellent flexibility.

Thesecond aspect of the present invention should also be useful since it provides a thermoplastic elastomer composition exhibiting excellent mechanical strength, and in particular, excellent resistance to compression set while maintaining excellent recyclability.

Next, the present invention is described in detail.

The thermoplastic elastomer composition according to the first aspect of the present invention (hereinafter simply referred to as "the composition of the first aspect of the present invention") is a thermoplastic elastomer composition comprising a thermoplastic elastomer (A) having a side chain having at least one member selected from the group consisting of imino group, nitrogen-containing heterocycle, and covalent crosslink site, and a carbonyl-containing group, and an ethylene-propylene copolymer (B) comprising propylene block and ethylene-propylene block.

The thermoplastic elastomer composition according to the second aspect of the present invention (hereinafter simply referred to as "the composition of the second aspect of the present invention") is a thermoplastic elastomer composition comprising a thermoplastic elastomer (A) having a side chain having at least one member selected from the group consisting of imino group, nitrogen-containing heterocycle, and covalent crosslink site, and a carbonyl-containing group; a styrene thermoplastic elastomer having a weight average molecular weight of at least 100,000; and a plasticizer.

Preferably, the composition of the first aspect of the present invention may further comprise a styrene thermoplastic elastomer in view of improving the resistance to compression set.

Preferably, the composition of the first aspect of the present invention may further comprise a filler in view of improving the reinforcement action and workability.

Next, the thermoplastic elastomer (A) included in the compositions of the first and second aspects of the present invention (hereinafter generally referred to as "the composition of the present invention"); the ethylene-propylene copolymer (B) included in the composition of the first aspect of the present invention; the styrene thermoplastic elastomer and the plasticizer included in the composition of the second aspect of the present invention; and other components are described in detail.

### <Thermoplastic elastomer (A)>

The thermoplastic elastomer (A) used in the composition of the present invention has a side chain containing at least one member selected from the group consisting of imino group, nitrogen-containing heterocycle, and covalent crosslink site, and a carbonyl-containing group in an elastomeric polymer which is a natural polymer or a synthetic polymer.

In the present invention, the "side chain" is a side chain or a terminal of the elastomeric polymer. The "having a side chain having at least one member selected from the group consisting of imino group, nitrogen-containing heterocycle, and covalent crosslink site, and a carbonyl-containing group" means that at least one member selected from the group consisting of imino group, nitrogen-containing heterocycle, and covalent crosslink site, and a carbonyl-containing group are bonded to an atom (which is typically carbon atom) comprised in the main chain of the elastomeric polymer by a chemically stable bond (such as covalent bond and ionic bond).

This includes embodiments where the chemically stable bond is a direct bond as well as embodiments where the bond is an indirect bond formed via other atoms which may be contained in the side chain.

The elastomeric polymer which forms the main chain of the thermoplastic elastomer (A) is not particularly limited as long as it is a polymer having a glass transition temperature of up to room temperature (25°C), namely, an elastomer, and any publicly known natural or synthetic polymer may be used.

Exemplary elastomeric polymers include diene rubbers such as natural rubber (NR), isoprene rubber (IR), butadiene rubber (BR), 1,2-butadiene rubber, styrene-butadiene rubber (SBR), acrylonitrile-butadiene rubber (NBR), chloroprene rubber (CR), butyl rubber (IIR), ethylene-propylene-diene rubber (EPDM), and their hydrogenated products; olefin rubbers such as ethylene-propylene rubber (EPM), ethylene-acrylic rubber (AEM), ethylene-butene rubber (EBM), chlorosulfonated polyethylene, acrylic rubber, fluororubber, polyethylene rubber, and polypropylene rubber; epichlorohydrin rubbers; polysulfide rubbers; silicone rubbers; and urethane rubbers.

The elastomeric polymer as mentioned above may be an elastomeric polymer containing a resin component. Exemplary elastomeric polymers include optionally hydrogenated polystyrene elastomeric polymers (for example, SBS, SIS, and SEBS), polyolefin elastomeric polymers, polyvinyl chloride elastomeric polymers, polyurethane elastomeric polymers, polyester elastomeric polymers, and polyamide elastomeric polymers.

The elastomeric polymer as mentioned above may be either a liquid or solid and may have a non-limited molecular weight, and these factors may be adequately selected depending on the application of the composition of the present invention and the physical properties desired therefore.

When fluidity of the composition of the present invention after heating (de-crosslinking) is important, the elastomeric polymer is preferably liquid, and in the case ofdienerubbers such as isoprene rubber or butadiene rubber, the weight average molecular weight is preferably in the range of 1,000 to 100,000, and more preferably in the range of approximately 1,000 to 50,000.

On the other hand, when strength of the composition of the present invention is important, the elastomeric polymer is preferably solid, and in the case of diene rubbers such as isoprene rubber or butadiene rubber, the weight average molecular weight is preferably at least 100,000, and more preferably in the range of approximately of 500,000 to 1, 500, 000.

In the present invention, the weight average molecular weight is the weight average molecular weight (calculated in terms of polystyrene) measured by gel permeation chromatography (GPC). In the measurement, the solvent used is preferably tetrahydrofuran (THF).

In the present invention, the elastomeric polymers used may be a mixture of two or more of the elastomeric polymers as mentioned above. In such a case, the mixing ratio of the elastomeric polymers may be adequately selected depending on the application of the composition of the present invention, physical properties required for the composition of the present invention, and the like.

The glass transition temperature of the elastomeric polymer is preferably up to 25°C as described above, and when the elastomeric polymer has two or more glass transition temperatures or when a mixture of two or more elastomeric polymers is used, at least one of the glass transition temperatures is preferably up to 25°C. This is preferable since the article molded from the composition of the present invention will exhibit rubber elasticity at room temperature when the glass transition temperature of the elastomeric polymer is within such range.

In the present invention, the glass transition temperature is the one measured by using DSC-Differential Scarining Calorimetry. The temperature elevation speed is preferably 10°C/min.

Such elastomeric polymer is preferably a diene rubber such as natural rubber (NR), isoprene rubber (IR), butadiene rubber (BR), 1,2-butadiene rubber, styrene-butadiene rubber (SBR), ethylene-propylene-diene rubber (EPDM), or butyl rubber (IIR); or an olefin rubber such as ethylene-propylene rubber (EPM), ethylene-acrylic rubber (AEM), or ethylene-butene rubber (EBM), since such rubber exhibits a glass transition temperature of up to 25°C and the article molded from the composition of the present invention exhibits rubber elasticity at room temperature. When an olefin rubber is employed, deterioration of the composition will be suppressed due to the absence of the double bond.

In the present invention, the amount of styrene bonded in the case of the styrene-butadiene rubber (SBR), or degree of hydrogenation in the case of the hydrogenated elastomeric polymer is not particularly limited, and such parameters may be adequately adjusted depending on the application of the composition of the present invention, physical properties required for the composition of the present invention, and the like.

When the main chain of the elastomeric polymer is ethylene-propylene-diene rubber (EPDM), ethylene-acrylic rubber (AEM), ethylene-propylene rubber (EPM), or ethylene-butene rubber (EBM), the ethylene content is preferably 10 to 90% by mole, and more preferably 40 to 90% by mole. When the ethylene content is within such range, the resulting composition will enjoy satisfactory resistance to compression set and mechanical strength.

The thermoplastic elastomer (A) used in the composition of the present invention is the elastomeric polymer as described above having a side chain having at least one member selected from the group consisting of an imino group, nitrogen-containing heterocycle, and covalent crosslink site, and a carbonyl-containing group. The side chain preferably has a nitrogen-containing heterocycle or a covalent crosslink site and a carbonyl-containing group, and more preferably has an imino group, a nitrogen-containing heterocycle, a covalent crosslink site, and a carbonyl-containing group.

In a preferred embodiment of the composition of the second aspect of the present invention, the thermoplastic elastomer (A) comprises the elastomeric polymer as described above having a side chain containing an imino group and/or a nitrogen-containing heterocyclic group, and a carbonyl-containing group. In this case, the side chain preferably contains an imino group and a carbonyl-containing group, and more preferably has an imino group, a nitrogen-containing heterocyclic group, and a carbonyl-containing group.

This includes embodiments wherein the imino group and the nitrogen-containing heterocyclic group are both contained in the same side chain as well as embodiments wherein the elastomeric polymer has at least two types of side chains, one type containing an imino group and a carbonyl-containing group, the other type containing a nitrogen-containing heterocyclic group and a carbonyl-containing group.

"Having a side chain containing an imino group and/or a nitrogen-containing heterocyclic group, and a carbonyl - containing group" means that the imino group and/or the nitrogen-containing heterocyclic group, and the carbonyl-containing group are bonded to the an atom (typically carbon atom) comprised in the main chain of the elastomeric polymer in a chemically stable manner, for example, by covalent bonding or ionic bonding.

This includes embodiments where the chemically stable bond is a direct bond as well as embodiments where the bond is an indirect bond formed via other atoms which may be contained in the side chain.

When the side chain contains animinogroupanda carbonyl-containing group, the side chain in the present invention preferably has a structure as represented by the following formula (1): 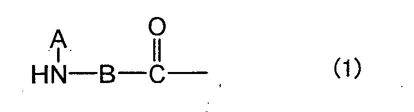 wherein A is an alkyl group containing 1 to 30 carbon atoms, an aralkyl group containing 7 to 20 carbon atoms, or an aryl group containing 6 to 20 carbon atoms; and B is a single bond, oxygen atom, amino group NR' (wherein R' is hydrogen atom or an alkyl group containing 1 to 10 carbon atoms), sulfur atom, or an organic group optionally containing such atom or group.

The substituent A is not particularly limited as long as it is an alkyl group containing 1 to 30 carbon atoms, an aralkyl group containing 7 to 20 carbon atoms or an aryl group containing 6 to 20 carbon atoms.

More specifically, the substituent A may be a straight chain alkyl group such as methyl group, ethyl group, propyl group, butyl group, pentyl group, octyl group, dodecyl group, or stearyl group; or a branched alkyl group such as isopropyl group, isobutyl group, s-butyl group, t-butyl group, isopentyl group, neopentyl group, t-pentyl group, 1-methylbutyl group, 1-methylheptyl group, or 2-ethylhexyl group; or an aralkyl group such as benzyl group or phenethyl group; an aryl group such as phenyl group, tolyl group (o-, m-, or p-), dimethylphenyl group, or mesityl group.

Among these, the preferred are alkyl groups, and in particular, butyl group, octyl group, dodecyl group, isopropyl group, and 2-et-hylhexyl group in view of the favorable high temperature flowability (workability) of the resulting composition of the present invention.

The substituent B is not particularly limited as long as it is a single bond, oxygen atom, amino group NR' (wherein R' is hydrogen atom or an alkyl group containing 1 to 10 carbon atoms), sulfur atom, or an organic group optionally containing such atom or group.

The substituent B may be a single bond; oxygen atom, sulfur atom, or amino group NR' (wherein R' is hydrogen atom or an alkyl group containing 1 to 10 carbon atoms); an alkylene group or an aralkylene group containing 1 to 20 carbon atoms and optionally containing such atom or group; an alkylene ether group (an alkyleneoxy group such as -O-CH₂CH₂- group), an alkyleneamino group (for example, -NH-CH₂CH₂- group), or an alkylene thioether group (an alkylenethio group such as -S-CH₂CH₂- group) containing 1 to 20 carbon atoms and containing such atom or group on its terminal; or an aralkylene ether group (aralkyleneoxy group), an aralkylene amino group, or an aralkylene thioether group containing 1 to 20 carbon atoms and containing such atom or group on its terminal.

Examples of the alkyl group containing 1 to 10 carbon atoms of the amino group NR' include methyl group, ethyl group, propyl group, butyl group, pentyl group, hexyl group, heptyl group, octyl group, nonyl group, decyl group, and their isomers.

The oxygen atom, the sulfur atom, or the amino group NR'; or the oxygen atom, the sulfur atom, or the amino group NR' of the alkylene ether group, the alkyleneamino group, the alkylene thioether group, the aralkylene ether group, the aralkylene amino group, and the aralkylene thioether group containing 1 to 20 carbon atoms and containing such atom or group on its terminal in the substituent B is preferably combined with the adjacent carbonyl group to form a conjugated ester group, amide group, imide group, thio-ester group, or the like.

Among these, the substituent B is preferably an oxygen atom, sulfur atom, or amino group which forms a conjugated system; or an alkylene ether group, an alkyleneamino group, or an alkylene thioether group containing 1 to 20 carbon atoms and having such atom or group on its terminal, and more preferably, an amino group (NH), an alkyleneamino group (-NH-CH₂- group, -NH-CH₂CH₂- group or -NH-CH₂CH₂CH₂- group), or an alkylene ether group (-O-CH₂- group, -O-CH₂CH₂- group, or -O-CH₂CH₂CH₂- group).

The thermoplastic elastomer (A) used in the composition of the present invention preferably has the side chain containing the structure represented by the formula (1) as a side chain containing a structure represented by the following formula (2) or (3) which binds to the main chain at α or β position.

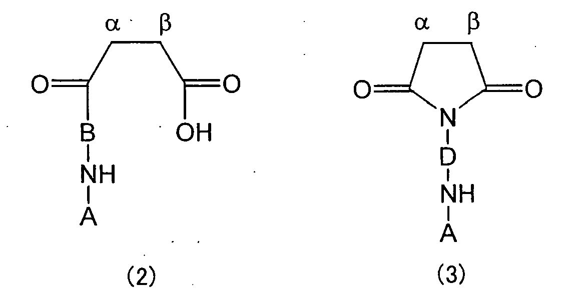

In the formula, A is an alkyl group containing 1 to 30 carbon atoms, an aralkyl group containing 7 to 20 carbon atoms, or an aryl group containing 6 to 20 carbon atoms; B and D are independently a single bond, oxygen atom, amino group NR' (wherein R' is hydrogen atom or an alkyl group containing 1 to 10 carbon atoms), sulfur atom, or an organic group optionally containing such atom or group.

In the formulae, the substituent A is basically as defined above for the substituent A of formula (1), and the substituents B and D are independently and basically as defined above for the substituent B of formula (1).

Among those mentioned for the substituent B of the formula (1), the substituent D in the formula (3) is preferably a single bond, or an alkylene group or an aralkylene group containing 1 to 20 carbon atoms and optionally containing oxygen atom, an amino group NR' or sulfur atom which forms a conjugated system with the imide nitrogen, and more preferably, an alkylene group. In other words, D preferably forms an alkyleneamino group or an aralkylene amino group, and more preferably, an alkyleneamino group containing 1 to 20 carbon atoms and optionally containing oxygen atom, an amino group NR', or sulfur atom with the imide nitrogen of the formula (3).

Examples of such substituent D include a single bond; an alkylene ether group, an alkyleneamino group, an alkylene thioether group or an aralkylene ether group, an aralkylene amino group, an aralkylene thioether group and the like containing 1 to 20 carbon atoms and having anoxygen atom, sulfur atom, or amino group on the terminal; methylene group, ethylene group, propylene group, butylene group, hexylene group, phenylene group, xylylene group, and isomers thereof.

In the present invention, the side chain containing an imino group and a carbonyl-containing group (more specifically, the side chain containing a structure represented by the formula (1) or the formula (2) or (3)) is preferably introduced at a rate (an introduction rate) of 0.1 to 50% by mole in relation to 100% by mole of the monomer constituting the elastomeric polymer. When the introduction rate is less than 0.1% by mole, strength after the crosslinking may be insufficient, while introduction rate in excess of 50% by mole may invite increase in the crosslinking density and loss of rubber elasticity. When the introduction rate is within such range, intermolecular and intramolecular interactions between the side chains of the elastomeric polymer will take place at an adequate balance, and the resulting composition of the present invention after crosslinking will enjoy high tensile strength and excellent recyclabilty as well as sufficient resistance to compression set. In view of improving such properties, the side chain is preferably introduced at a rate of 0.1 to 30% by mole, and more preferably at a rate of 0.5 to 20% by mole.

In the present invention, when the side chain contains a nitrogen-containing heterocycle and a carbonyl-containing group, the side chain preferably contains a structure represented by the following formula (4).

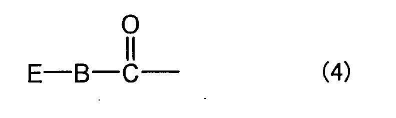

In the formula, E is a nitrogen-containing heterocycle, and B is a single bond, oxygen atom, amino group NR' (wherein R' is ahydrogenatom or an alkyl group containing 1 to 10 carbon atoms), sulfur atom, or an organic group optionally containing such atom or group.

Examples of the nitrogen-containing heterocycle E include the nitrogen-containing heterocycles as mentioned below.

The substituent B is basically the same as the substituent B of the formula (1).

The nitrogen-containing heterocycle may be the one containing a hetero atom such as sulfur atom, oxygen atom, or phosphorus atom other than the nitrogen atom in the heterocycle as long as it contains nitrogen atom in the heterocycle. Such heterocyclic compound is used since the hydrogen bond forming the crosslinking is strengthened by the heterocyclic structure and the resulting composition of the present invention will exhibit an improved tensile strength.

The nitrogen-containing heterocycle may also be substituted, and exemplary substituents include alkyl groups such as methyl group, ethyl group, (iso)propyl group, and hexyl group; alkoxy groups such as methoxy group, ethoxy group, and (iso)propoxy group; groups comprising a halogen atom such as fluorine atom, chlorine atom, bromine atom, or iodine atom; cyano group; amino group; aromatic hydrocarbon group; ester group; ether group; acyl group; and thioether group, and these groups may also be used in combination. The position of substitution by the substituent is not particularly limited, and the number of substituents is also not limited.

The nitrogen-containing heterocycle may not necessary be aromatic. However, the nitrogen-containing heterocycle is preferably aromatic since the resulting composition of the present invention will enjoy high tensile strength after crosslinking as well as improved mechanical strength.

The nitrogen-containing heterocycle is preferably a five-membered ring or a six-membered ring.

Exemplary nitrogen-containing heterocycles include pyrrololine, pyrrolidone, oxindole (2-oxindole), indoxyl (3-oxindole), dioxindole, isatin, indolyl, phthalimidine, β-isoindigo, monoporphyrin, diporphyrin, triporphyrin, azaporphyrin, phthalocyanine, hemoglobin, uroporphyrin, chlorophyll, phylloerythrin, imidazole, pyrazole, triazole, tetrazole, benzimidazole, benzopyrazole, benzotriazole, imidazoline, imidazolone, imidazolidone, hydantoin, pyrazoline, pyrazolone, pyrazolidone, indazole, pyridoindole, purine, cinnoline, pyrrole, pyrroline, indole, indoline, oxylindole, carbazole, phenothiazine, indolenine, isoindole, oxazole, thiazole, isoxazole, isothiazole, oxadiazole, thiadiazole, oxatriazole, thiatriazole, phenanthroline, oxazine, benzoxazine, phthalazine, pteridine, pyrazine, phenazine, tetrazine, benzoxazole, benzisoxazole, anthranyl, benzothiazole, benzofurazan, pyridine, quinoline, isoquinoline, acridine, phenanthridine, anthrazoline, naphthyridine, thiazine, pyridazine, pyrimidine, quinazoline, quinoxaline, triazine, histidine, triazolidine, melamine, adenine, guanine, thymine, cytosine, and derivatives thereof. Among these, the particularly preferred of the nitrogen-containing five-membered rings are the following compounds, the triazole derivative represented by the following formula (25), and the imidazole derivative represented by the following formula (26). These groups may be optionally substituted with various substituents as described above, and they may also be hydrogenated or dehydrogenated.

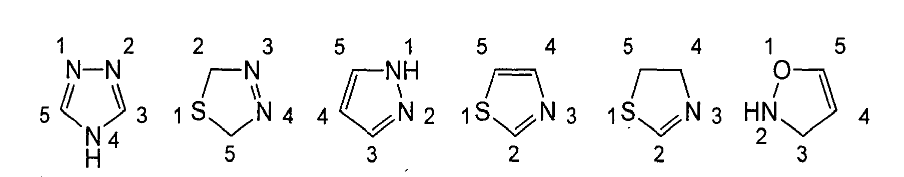

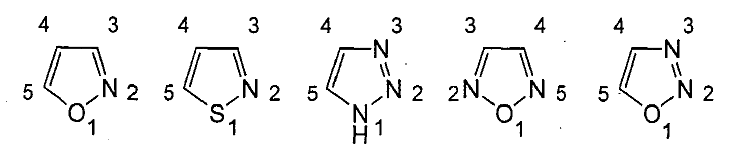

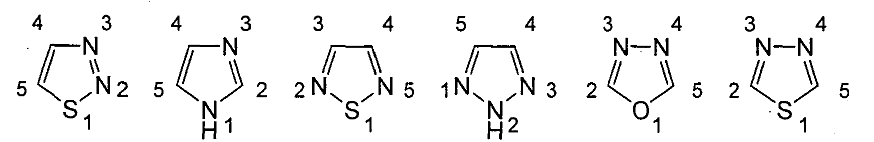

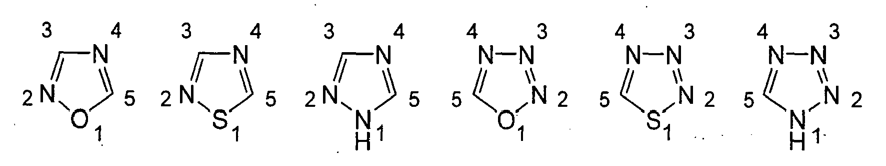

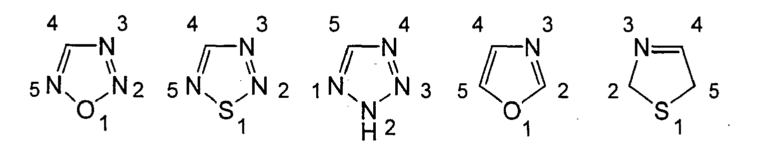

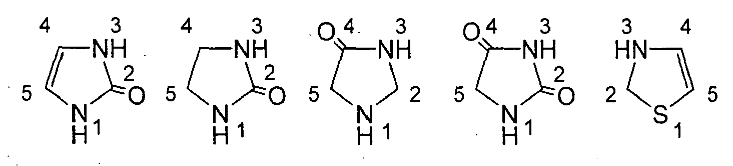

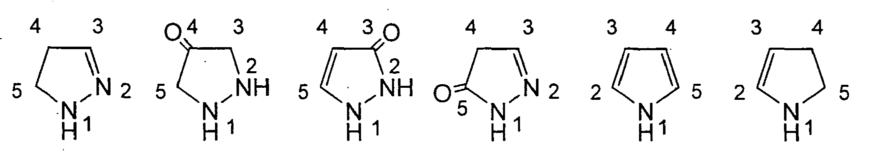

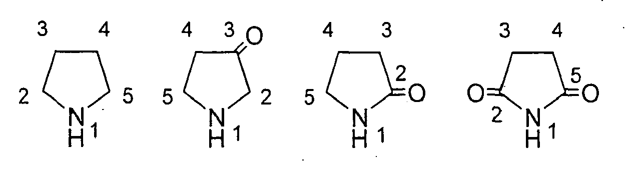

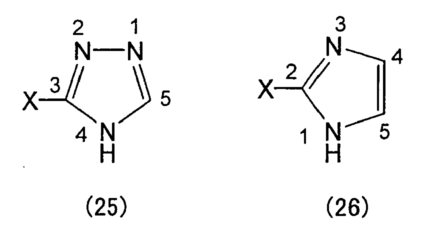

In the formulae, the substituent X is an alkyl group containing 1 to 30 carbon atoms, an aralkyl group containing 7 to 20 carbon atoms or an aryl group containing 6 to 20 carbon atoms, which is basically the same as the substituent A of the formula (1).

With regard to the nitrogen-containing six-membered ring, preferred are the compounds as shown below. These compounds may also have the substituents as described above, and they may also be hydrogenated or dehydrogenated.

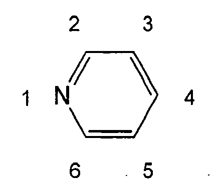

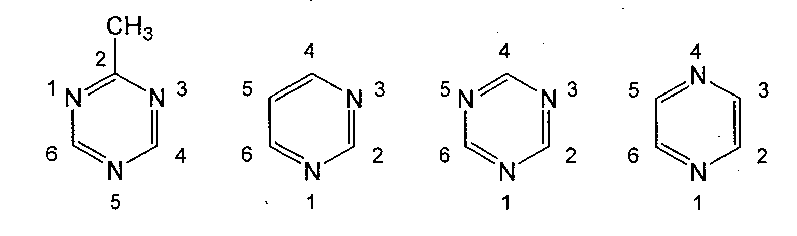

A condensation product of the nitrogen-containing heterocycle with a benzene ring or a condensation product of a nitrogen-containing heterocycle with another nitrogen-containing heterocycle may also be employed. Exemplary condensed rings are shown below. These condensed rings may also have the substituents as described above, and they may also be hydrogenated or dehydrogenated.

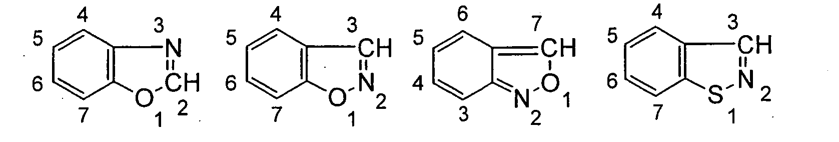

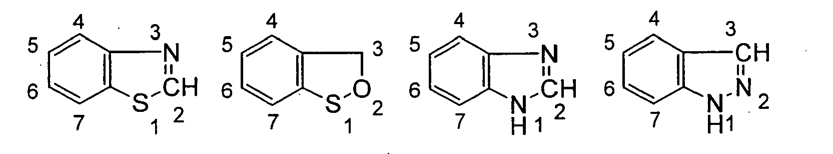

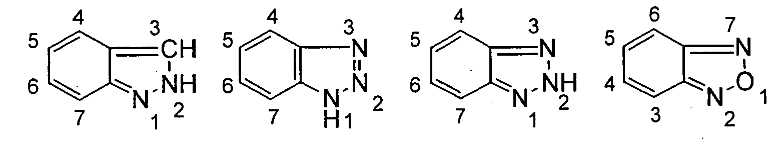

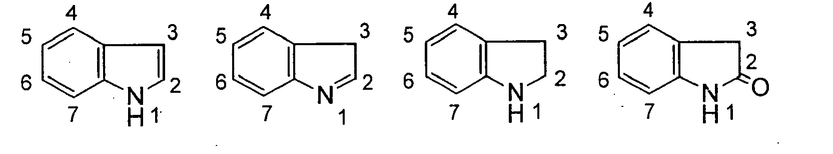

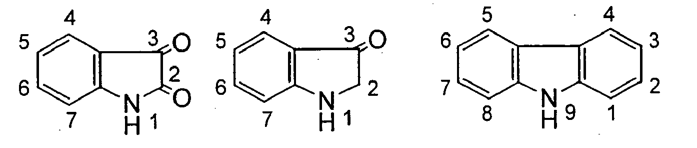

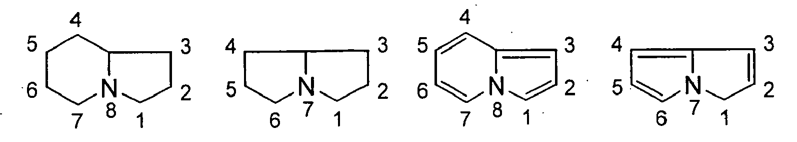

Among such nitrogen-containing heterocycles, the preferred are triazole ring, thiadiazole ring, pyridine ring, thiazole ring, imidazole ring, and hydantoin ring since the resulting composition of the present invention will enjoy excellent recyclability, resistance to compression set, mechanical strength, and hardness.

The thermoplastic elastomer (A) used in the composition of the present invention preferably has the side chain having a structure represented by the formula (4) as a side chain having a structure represented by the following formula (5) or (6) which binds to the main chain at α or β position: 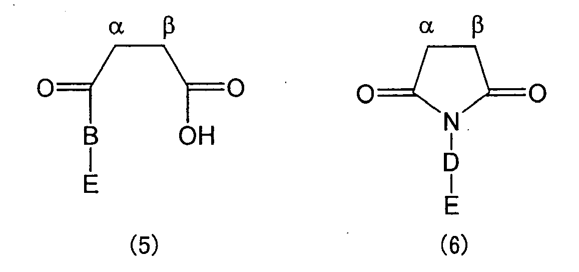 wherein E is a nitrogen-containing heterocycle, and B and D are independently a single bond, oxygen atom, amino group NR' (wherein R' is hydrogen atom or an alkyl group containing 1 to 10 carbon atoms), sulfur atom, or an organic group optionally containing such atom or group.

The nitrogen-containing heterocycle E may be any of the nitrogen-containing heterocycles as mentioned above.

The substituents B and D are independently and basically the same as the substituent B of the formula (1).

The substituent D in the formula (6) is preferably a single bond, an alkylene group or an aralkylene group containing 1 to 20 carbon atoms and optionally containing an oxygen atom, an amino group NR' or sulfur atom which forms a conjugated system with the imide nitrogen, and more preferably, the single bond. In other words, D preferably forms an alkyleneamino group or an aralkylene amino group containing 1 to 20 carbon atoms and optionally containing oxygen atom, an amino group NR', or sulfur atom with the imide nitrogen of the formula (6), and more preferably, D is the single bond so that the nitrogen-containing heterocycle directly binds to the imide nitrogen of the formula (6).

When the thermoplastic elastomer (A) used in the composition of the present invention has a side chain containing a triazole ring, imidazole ring, or thiazole ring as the side chain containing the nitrogen-containing heterocycle, the side chain containing a structure represented by the formula (4) is preferably a side chain having a structure represented by the following formula (13), the following formula (14) or (15), or the following formula (16), and more preferably, a side chain having a structure represented by the following formula (17) or (18), any one of the following formulae (19) to (22), or the following formula (23) or (24) which binds to the main chain at α or β position: 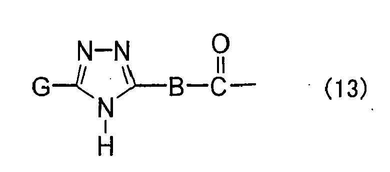 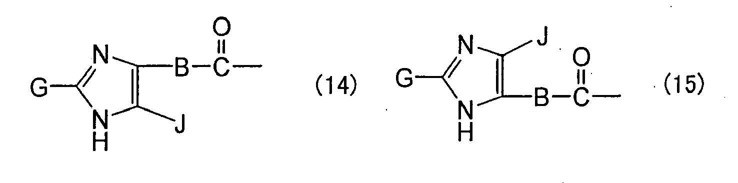 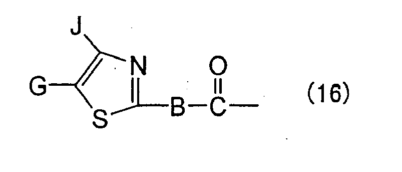 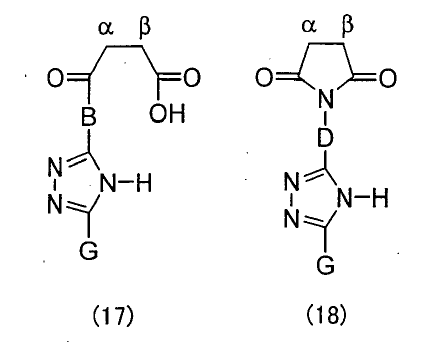 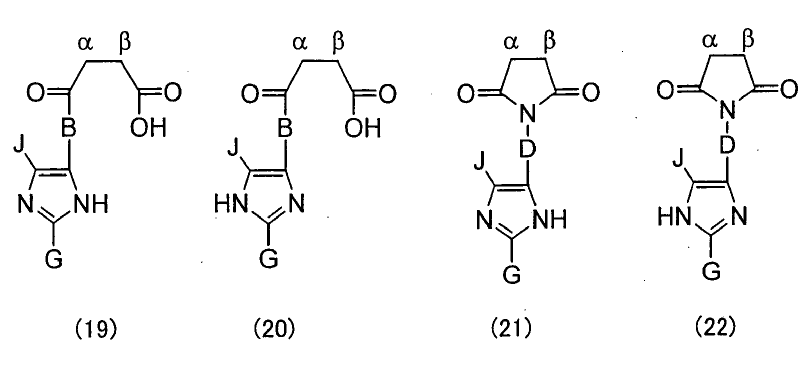 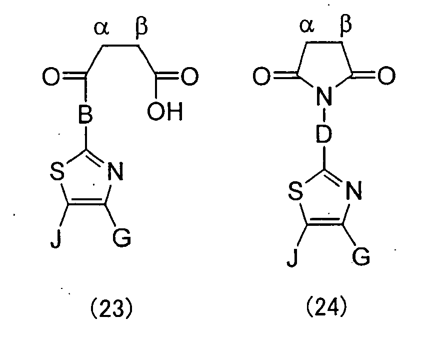 wherein B and D are independently a single bond, oxygen atom, amino group NR' (wherein R' is a hydrogen atom or an alkyl group containing 1 to 10 carbon atoms), sulfur atom, or an organic group optionally containing such atom or group, and G and J are independently a hydrogen atom, an alkyl group containing 1 to 30 carbon atoms, aralkyl group containing 7 to 20 carbon atoms, or an aryl group containing 6 to 20 carbon atoms.

In the formulae, the substituents B and D are independently and basically as defined above for the substituents B and D of formulae (4) to (6).

More specifically, the substituents G and J may be independently a hydrogen atom; a straight chain alkyl group such as methyl group, ethyl group, propyl group, butyl group, pentyl group, octyl group, dodecyl group, or stearyl group; a branched alkyl group such as isopropyl group, isobutyl group, s-butyl group, t-butyl group, isopentyl group, neopentyl group, t-pentyl group, 1-methylbutyl group, 1-methylheptyl group, or 2-ethylhexyl group; an aralkyl group such as benzyl group or phenethyl group; or an aryl group such as phenyl group, tolyl group (o-, m-, or p-), dimethylphenyl group, or mesityl group.

In the present invention, the side chain containing a nitrogen-containing heterocycle and a carbonyl-containing group (more specifically, the side chain containing a structure represented by the formula (4) or the formula (5) or (6)) is preferably introduced at a rate (an introduction rate) of 0.1 to 50% by mole in relation to 100% by mole of the monomer constituting the elastomeric polymer. When the introduction rate is less than 0.1% by mole, strength after the crosslinking may be insufficient, while introduction rate in excess of 50% by mole may invite increase in the crosslinking density and loss of rubber elasticity or loss of recyclability. When the introduction rate is within such range, intermolecular and intramolecular interactions between the side chains of the elastomeric polymer will take place at an adequate balance, and the resulting composition of the present invention after crosslinking will enjoy high tensile strength and excellent recyclabilty as well as sufficient resistance to compression set. In view of improving such properties, the side chain is preferably introduced at a rate of 0.1 to 30% by mole, and more preferably at a rate of 0.5 to 20% by mole.

In the present invention, when the elastomer has the side chain containing an imino group and a carbonyl-containing group together with the side chain containing a nitrogen-containing heterocycle and a carbonyl-containing group, these side chains are preferably introduced at a total rate of 0.1 to 50% by mole (introduction rate) in relation to 100% by mole of the monomer constituting the elastomeric polymer, and the ratio of the side chain containing a nitrogen-containing heterocycle and a carbonyl-containing group / the side chain containing imino group and a carbonyl-containing group is preferably 1/99 to 99/1, and more preferably 10/90 to 90/10.

When the introduction rate and the introduction ratio are within such range, the resulting composition will enjoy improved tensile strength after the crosslinking, excellent recyclability, and improved mechanical strength such as tensile strength while retaining the resistance to compression set. Coloring of the composition caused by the nitrogen-containing heterocycle introduced is also prevented.

Next, binding position of the nitrogen-containing heterocycle is described for the case where the thermoplastic elastomer (A) used in the composition of the present invention has a side chain containing a nitrogen-containing heterocycle. For convenience of description, the nitrogen-containing heterocycle used in the description is the "nitrogen-containing n-membered ring compound (n≥3)".

The binding positions in the following description ("position 1 to position n") are based on IUPAC nomenclature. For example, in the case of the compound having three nitrogen atoms having unshared electron pair, the binding position is determined by the order defined in the IUPAC nomenclature. More specifically, the binding positions are indicated on the nitrogen-containing heterocycles of the five-membered ring, the six-membered ring, and the condensed ring.

In the thermoplastic elastomer (A), the binding position of the nitrogen-containing n-membered ring compound which binds to the thermoplastic elastomer copolymer either directly or by an organic group is not particularly limited, and the binding position may be any position (position 1 to position n). The binding position, however, is preferably position 1 or positions 3 to n.

When one nitrogen atom is contained in the nitrogen-containing n-membered ring compound (for example, as in the case of pyridine ring), the binding position is preferably position 3 to position (n-1) for ease of intramolecular chelate formation and the superior physical properties of the composition including the tensile strength.

Adequate selection of the binding position of the nitrogen-containing n-membered ring compound facilitates, smooth formation of the crosslinkage in the thermoplastic elastomer by hydrogen bond, ionic bond, coordinate bond, and the like between the molecules of thermoplastic elastomers, and as a consequence, the composition will enjoy superior recyclability and mechanical properties.

In the present invention, when the side chain contains a covalent crosslink site and a carbonyl-containing group, it is more preferable that a crosslink be formed in the covalent crosslink site by at least one bond selected from the group consisting of amide, ester, lactone, urethane, ether, thiourethane, and thioether. The thermoplastic elastomer (A) used in the composition of the present invention may be the one which has been crosslinked by such binding.

The side chain having the covalent crosslink site and the carbonyl-containing group is not particularly limited as long as it has a functional group which can form at least one bond selected from the group consisting of amide, ester, lactone, urethane, ether, thiourethane, and thioether by the reaction with "a compound capable of forming a covalent bond" as the covalent crosslink site in addition to the carbonyl-containing group.

In the present invention, examples of the "compound capable of forming covalent bond" include a polyamine compound having two or more amino groups and/or imino groups in one molecule (two or more in total of amino and imino groups in one molecule when both the amino group and the imino group are included in the molecule); a polyol compound having two or more hydroxy groups in one molecule; a polyisocyanate compound having two or more isocyanate (NCO) groups in one compound; and a polythiol compound having two or more thiol groups (mercapto groups) in one molecule.

Exemplary polyamine compounds include an alicyclic amine, an aliphatic polyamine, an aromatic polyamine, and nitrogen-containing heterocyclic amine as described below.

Exemplary alicyclic amines include 1-amino-3-aminomethyl-3,5,5-trimethylcyclohexane, bis-(4-aminocyclohexyl)methane, diaminocyclohexane, and di(aminomethyl)cyclohexane.

Exemplary aliphatic polyamines include methylenediamine, ethylenediamine, propylenediamine, 1,2-diaminopropane, 1,3-diaminopentane, hexamethylenediamine, diaminoheptane, diaminododecane, diethylenetriamine, diethylaminopropylamine, N-aminoethylpiperazine, triethylenetetramine, N,N'-dimethylethylenediamine, N,N'-diethylethylenediamine, N,N'-diisopropylethylenediamine, N,N'-dimethyl-1,3-propanediamine, N,N'-diethyl-1,3-propanediamine, N,N'-diisopropyl-1,3-propanediamine, N,N'-dimethyl-1,6-hexanediamine, N,N'-diethyl-1,6-hexanediamine, N,N',N''-trimethylbis(hexamethylene)triamine, and polyethylenimine.

Exemplary aromatic polyamines and nitrogen-containing heterocyclic amines include diaminotoluene, diaminoxylene, tetramethylxylylenediamine, tris(dimethylaminomethyl)phenol, metaphenylenediamine, diaminodipnenylmethane, diaminodiphenylsulfone, and 3-amino-1,2,4-triazole.

The polyamine compound may have at least one of its hydrogen atoms substituted with an alkyl group, an alkylene group, an aralkylene group, oxy group, an acyl group, a halogen atom, or the like. The polyamine compound may also contain a hetero atom such as oxygen atom or sulfur atom in its skeleton.

In addition, the polyamine compound may be used either alone or in combination of two or more. When two or more polyamine compounds are used, they may be mixed at a ratio adequately selected depending on the application of the composition of the present invention, physical properties required for the composition of the present invention, and the like.

Of the polyamine compound as mentioned above, the preferred are hexamethylenediamine, N,N'-dimethyl-1,6-hexanediamine, diaminodiphenylsulfone, and polyethylenimine in view of their excellent effect in improving the resistance to compression set and mechanical strength, and in particular, tensile strength.

The polyol compound is not particularly limited for its molecular weight or skeleton as long as it contains two or more hydroxy groups, and exemplary polyol compounds include polyether polyols, polyester polyols, other polyols, and mixtures thereof as described below.

Exemplary polyether polyols include polyols produced by adding at least one member selected from ethylene oxide, propylene oxide, buthylene oxide, styrene oxide, and the like to at least one member selected from polyhydric alcohols such as ethylene glycol, diethylene glycol, propylene glycol, dipropylene glycol, glycerine, 1,1,1-trimethylol propane, 1,2,5-hexanetriol, 1,3-butanediol, 1,4-butanediol, 4,4'-dihydroxyphenylpropane, 4,4'-dihydroxyphenylmethane, and pentaerythritol; polyoxytetramethylene oxide; and the like which may be used alone or in combination of two or more.

Exemplary polyester polyols include condensation polymers of one or more low molecular weight polyols such as ethylene glycol, propylene glycol, butanediol pentanediol, hexanediol, cyclohexane dimethanol, glycerine, and 1,1,1-trimethylolpropane with one or more of low molecular weight carboxylic acids and oligomeric acids such as glutaric acid, adipic acid, pimelic acid, suberic acid, sebacic acid, terephthalic acid, isophthalic acid, and dimer acid; and polymers produced by ring opening such as propiolactone and valerolactone; which may be used alone or in combination of two or more.

Exemplary other polyols include polymer polyol, polycarbonate polyol; polybutadiene polyol; hydrogenated polybutadiene polyol; acrylic polyol; ethylene glycol, diethylene glycol, propylene glycol, dipropylene glycol, butanediol, pentanediol, hexanediol, polyethylene glycol laurylamine (for example, N,N-bis(2-hydroxyethyl)laurylamine), polypropylene glycol laurylamine (for example, N,N-bis(2-methyl-2-hydroxyethyl)laurylamine) and polyethylene glycol octylamine (for example, N,N-bis(2-hydroxyethyl)octylamine), polypropylene glycol octylamine (for example, N,N-bis(2-methyl-2-hydroxyethyl)octylamine), polyethylene glycol stearylamine (for example, N,N-bis(2-hydroxyethyl)stearylamine), polypropylene glycol stearylamine (for example, N,N-bis(2-methyl-2-hydroxyethyl)stearylamine) and other low molecular weight polyols, which may be used alone or in combination of two or more.

Exemplary polyisocyanate compounds include diisocyanate compounds such as aromatic polyisocyanates such as 2,4-tolylene diisocyanate (2,4-TDI), 2,6-tolylene diisocyanate (2,6-TDI), 4,4'-diphenylmethanediisocyanate (4, 4' -MDI), 2,4'-diphenylmethanediisocyanate (2, 4' -MDI), 1,4-phenylene diisocyanate, xylylenediisocyanate (XDI), tetramethylxylylenediisocyanate (TMXDI), tolidinediisocyanate (TODI), and 1,5-naphthalenediisocyanate (NDI); aliphatic polyisocyanates such as hexamethylene diisocyanate (HDI), trimethylhexamethylene diisocyanate (TMHDI), lysine diisocyanate, and methyl norbornane diisocyanate (NBDI); and alicyclic polyisocyanates such as transcyclohexane-1,4-diisocyanate, isophorone diisocyanate (IPDI), H₆XDI (hydrogenated XDI), H₁₂MDI (hydrogenated MDI), and H₆TDI (hydrogenated TDI); polyisocyanate compounds such as polymethylene polyphenylene polyisocyanate; carbodiimide-modified polyisocyanates of such isocyanate compounds; isocyanurate-modified polyisocyanates of such isocyanate compounds; urethane prepolymers produced by reacting such an isocyanate compound with a polyol compound as described above; and the like, which may be used alone or in combination of two or more.

The polythiol compound is not limited for its molecular weight or skeleton as long as it has two or more thiol groups. Exemplary polythiol compounds include methanedithiol, 1,3-butanedithiol, 1,4-butanedithiol, 2,3-butanedithiol, 1,2-benzenedithiol, 1,3-benzenedithiol, 1,4-benzenedithiol, 1,10-decanedithiol, 1,2-ethanedithiol, 1,6-hexanedithiol, 1,9-nonanedithiol, 1,8-octanedithiol, 1,5-pentanedithiol, 1,2-propanedithiol, 1,3-propanedithiol, toluene-3,4-dithiol, 3,6-dichloro-1,2-benzenedithiol, 1,5-naphthalenedithiol, 1,2-benzenedimethanethiol, 1,3-benzenedimethanethiol, 1,4-benzenedimethanethiol, 4,4'-thiobisbenzenethiol, 2,5-dimercapto-1,3,4-thiadiazole, 1,8-dimercapto-3,6-dioxaoctane, 1,5-dimercapto-3-thiapentane, 1,3,5-triazine-2,4,6-trithiol (trimercapto-triazine), 2-di-n-butylamino-4,6-dimercapto-s-triazine, trimethylolpropane tris(β-thiopropionate), trimethylolpropane tris(thioglycolate), and polythiol (thiocol or thiol-modified polymer (resin, rubber, etc.), which may be used alone or in combination of two or more.

Examples of the preferable functional group capable of generating at least one bond selected from the group consisting of amide, ester, lactone, urethane, ether, thiourethane, and thioether by the reaction with such "compound capable of forming covalent bond" include acyclic acid anhydride group, hydroxy group, amino group, carboxy group, isocyanate group, and thiol group.

The side chain having the covalent crosslink site and the carbonyl-containing group is not particularly limited as long as it has such functional group and the carbonyl-containing group.

The thermoplastic elastomer (A) used in the composition of the present invention preferably has at least one crosslink in the covalent crosslink site, namely, at least one crosslink formed by the covalent bonding between the functional group as described above and the "compound capable of forming covalent bond" in one molecule. In particular, when the crosslink is formed by at least one bond selected from the group consisting of lactone, urethane, ether, thiourethane, and thioether, the thermoplastic elastomer preferably has at least 2 crosslinks, more preferably 2 to 20 crosslinks, and most preferably 2 to 10 crosslinks.

In the present invention, the crosslink in the covalent crosslink site preferably contains a tertiary amino group (-N=) in view of the improved resistance to compression set and mechanical strength (elongation at break and breaking strength) of the resulting composition of the present invention. Such favorable properties are believed to have been achieved by the increase of the crosslink density through the hydrogen bond (an interaction) of the tertiary amino group with the carbonyl-containing group and the nitrogen-containing heterocycle. Accordingly, among those mentioned above, the "compound capable of forming covalent bond" is preferably polyethylene glycol laurylamine (for example, N,N-bis(2-hydroxyethyl)laurylamine), polypropylene glycol laurylamine (for example, N,N-bis(2-methyl-2-hydroxyethyl)laurylamine), polyethylene glycol octylamine (for example, N,N-bis(2-hydroxyethyl)octylamine), polypropylene glycol octylamine (for example, N,N-bis(2-methyl-2-hydroxyethyl)octylamine), polyethylene glycol stearylamine (for example, N,N-bis(2-hydroxyethyl)stearylamine), or polypropylene glycol stearylamine (for example, N,N-bis(2-methyl-2-hydroxyethyl)stearylamine).

In the present invention, the crosslink in the covalent crosslink site preferably contains at least one of the structures represented by the following formulae (7) to (9), and T in these formulae preferably has tertiary amino group.

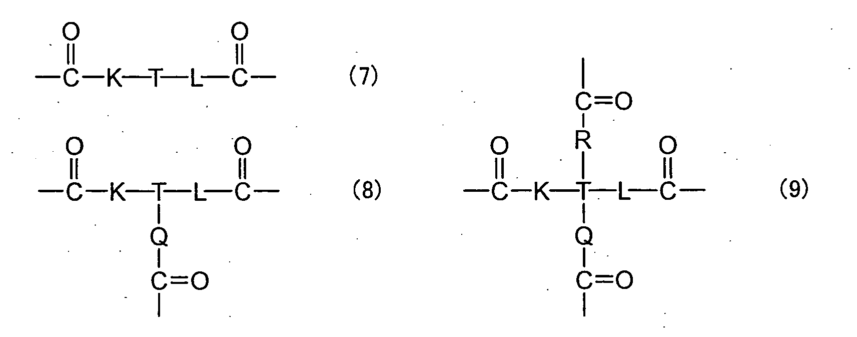

In the formulae, K, L, Q, and R are independently a single bond, oxygen atom, amino group NR' (wherein R' is a hydrogen atom or an alkyl group containing 1 to 10 carbon atoms), sulfur atom, or an organic group optionally containing such atom or group; and T is a hydrocarbon group preferably containing 1 to 1000 carbon atoms, more preferably containing 1 to 100 carbon atoms and further more preferably 1 to 20 carbon atoms which may optionally contain an oxygen atom, sulfur atom, or nitrogen atom, and which may be branched.

The substituents K, L, Q, and R are independently and basically the same as the substituent B of the formula (1).

Examples of the substituent T include alkylene groups such as methylene group, ethylene group, 1,3-propylene group, 1,4-butylene group, 1,5-pentylene group, 1,6-hexylene group, 1,7-heptylene group, 1,8-octylene group, 1,9-nonylene group, 1,10-decylene group, 1,11-undecylene group, and 1,12-dodecylene group; N,N-diethyldodecylamine-2,2'-diyl, N,N-dipropyldodecylamine-2,2'-diyl, N,N-diethyloctylamine-2,2'-diyl, N,N-dipropyloctylamine-2,2'-diyl, N,N-diethyl stearylamine-2,2'-diyl, N,N-dipropyl stearyl amine-2,2'-diyl; vinylene group; divalent alicyclic hydrocarbon groups such as 1,4-cyclohexylene group; divalent aromatic hydrocarbon groups such as 1,4-phenylene group, 1,2-phenylene group, 1,3-phenylene group, and 1,3-phenylene bis(methylene)group; trivalent hydrocarbon groups such as propane-1,2,3-triyl, butane-1,3,4-triyl, trimethylamine-1,1',1"-triyl, and triethylamine-2,2',2" - triyl; tetravalent hydrocarbon groups represented by the following formulae (27) and (28); the substituents formed by combining the foregoing substituents; and polymers such as polyethylene, polypropylene, polyethyleneimine, polyamide, polyester, polyether, and polyurethane.

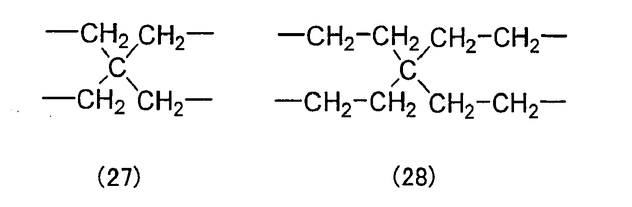

In the present invention, the crosslink in the covalent crosslink site preferably contains at least one of the structures represented by the following formulae (10) to (12) which bonds to the elastomeric polymer main chain at α or β position, and more preferably, T in the formulae contains tertiary amino group. Examples of the preferable structures represented the following formulae (10) to (12) include the compounds represented by the following formulae (29) to (40).

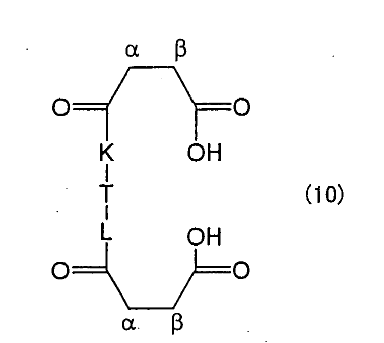

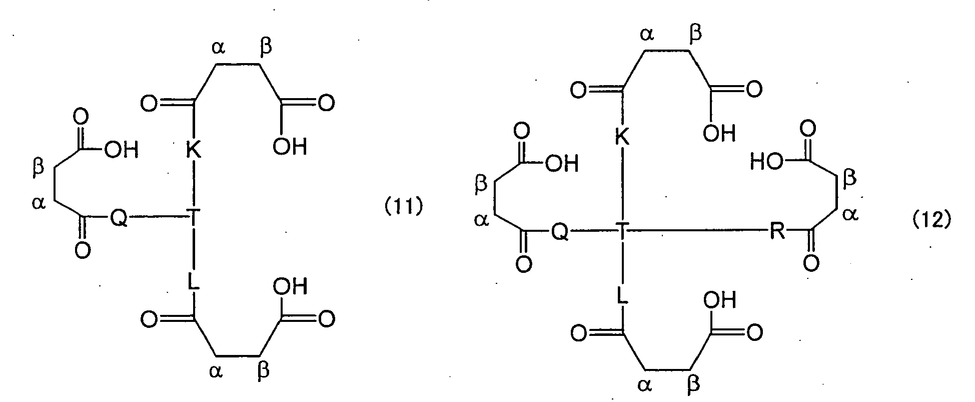

In the formulae, substituents K, L, Q, and R are independently and basically the same as substituent K, L, Q, and R in the formulae (7) to (9), and substituent T is basically the same as the substituent T in the formula (7).

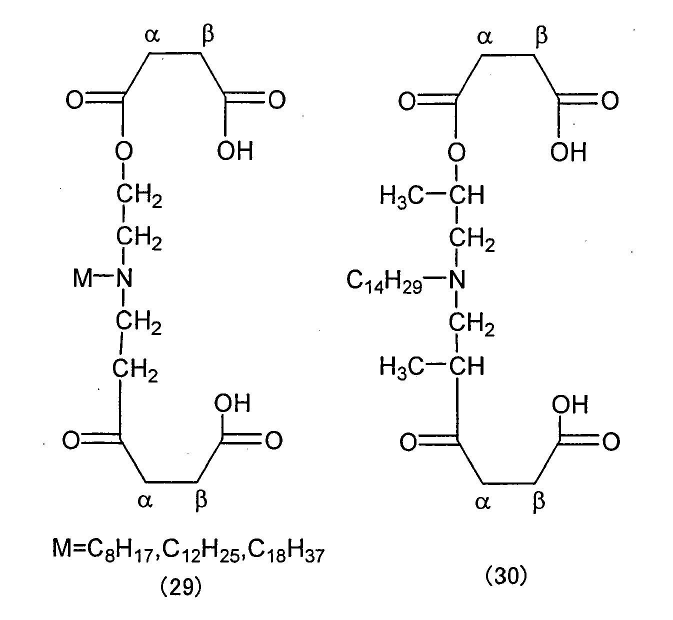

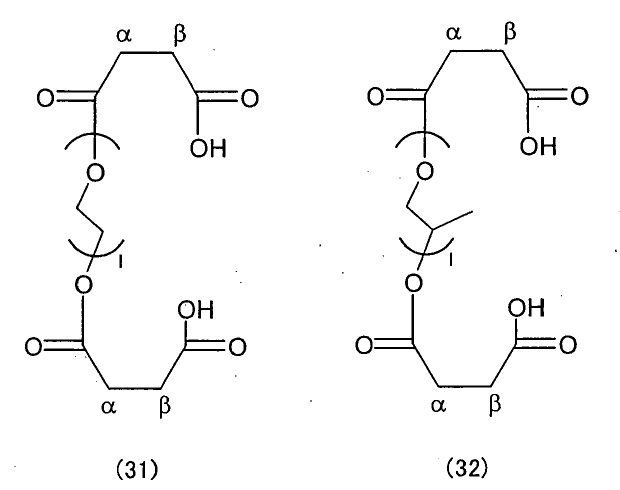

In the formulae, 1 is an integer of at least 1.

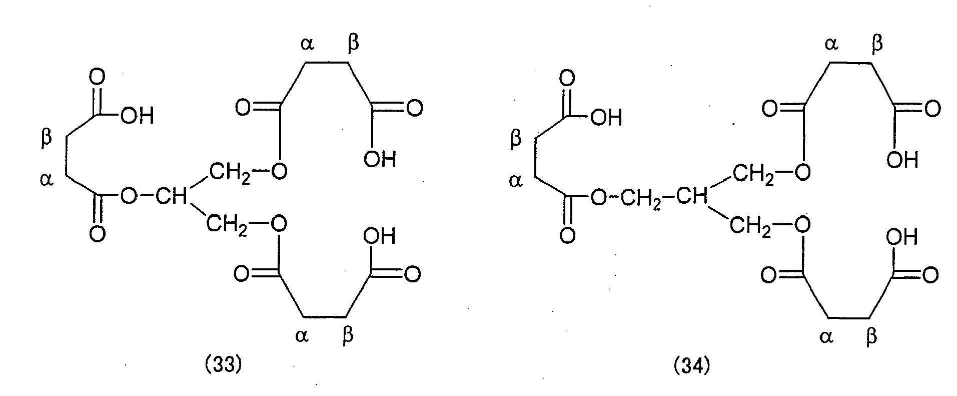

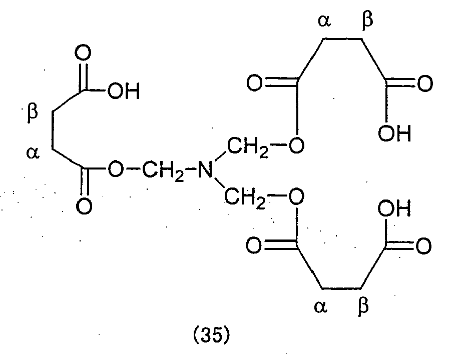

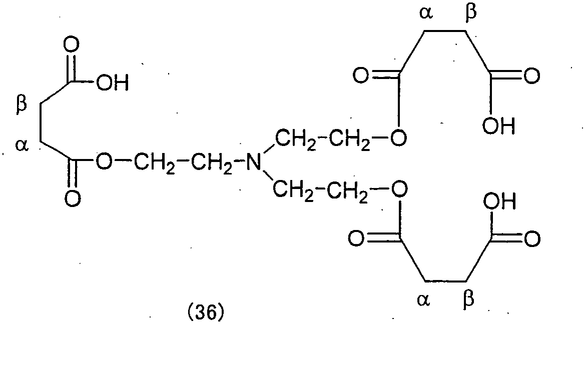

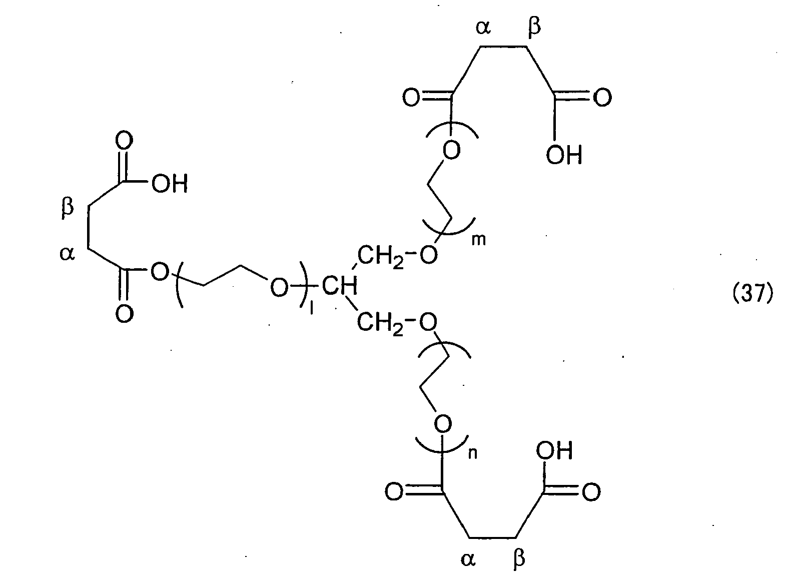

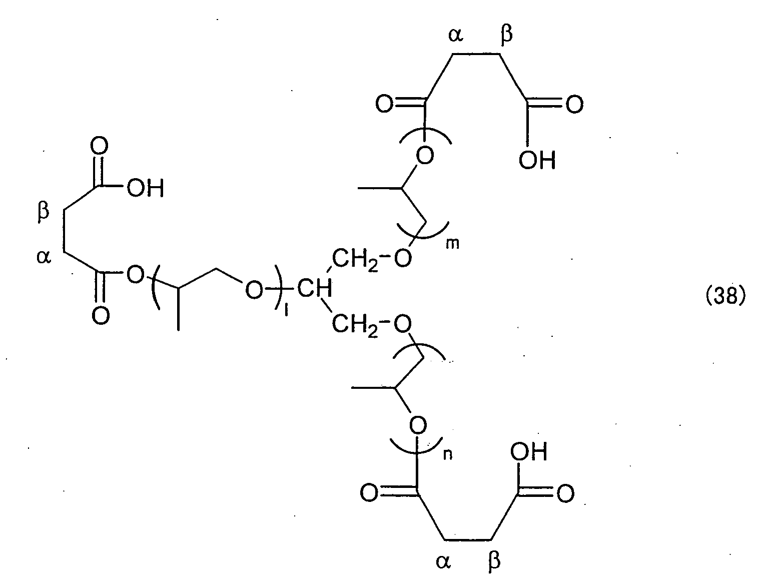

In the formulae, 1, m, and n are independently an integer of at least 1.

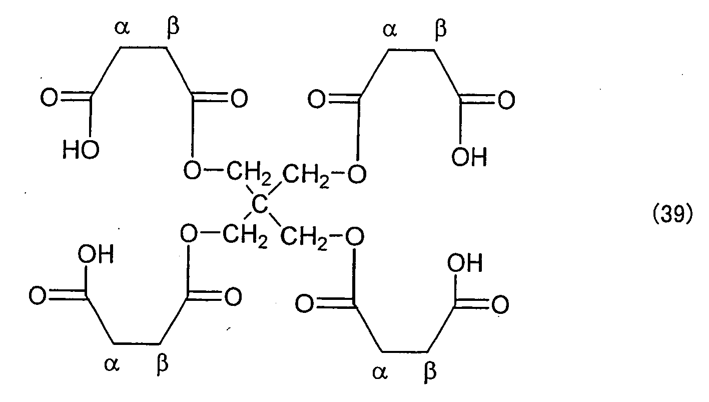

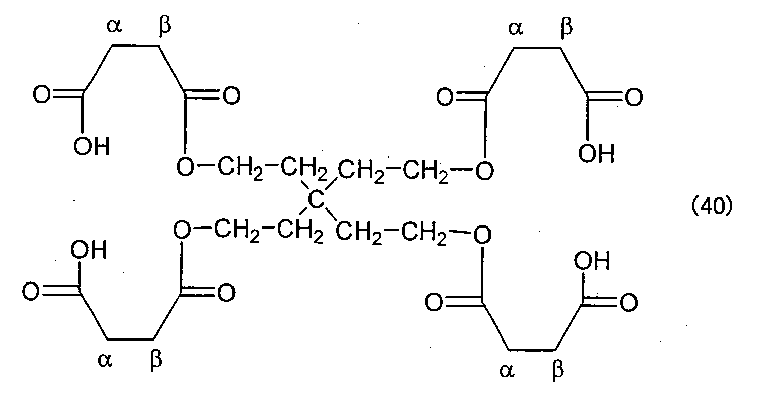

In the present invention, the crosslink in the covalent crosslink site is preferably formed by the reaction between a cyclic acid anhydride group, and a hydroxy group or amino group and/or imino group.

The thermoplastic elastomer (A) used in the composition of the present invention preferably has a glass transition temperature of up to 25°C, and when the thermoplastic elastomer has two or more glass transition temperatures or when a mixture of two or more thermoplastic elastomers is used, at least one of the glass transition temperatures is preferably up to 25°C. When the glass transition temperature is up to 25°C, the article molded from such thermoplastic elastomer will exhibit rubber elasticity at room temperature.

The composition of the present invention contains at least one such thermoplastic elastomer. When two or more thermoplastic elastomers are incorporated, they may be used at an adequate mixing ratio determined according to the application of the composition of the present invention, physical properties required for the composition of the present invention, and the like.

The method for producing the thermoplastic elastomer (A) used in the composition of the present invention is not particularly limited, and any method commonly used in the art may be employed.

More specifically, the method for producing a thermoplastic elastomer (A) having a side chain containing an imino group and a carbonyl-containing group preferably comprises a step of reacting an elastomeric polymer having a cyclic acid anhydride group in its side chain with a compound capable of introducing an imino group (hereinafter referred to as "reaction step A"), and the method for producing a thermoplastic elastomer (A) having a side chain containinga nitrogen-containing heterocycle and a carbonyl-containing group preferably comprises a step of reacting an elastomeric polymer having a cyclic acid anhydride group in its side chain with a compound capable of introducing a nitrogen-containing heterocycle (hereafter referred to as "reaction step B"). The method for producing a thermoplastic elastomer (A) having a side chain containing an imino group, a nitrogen-containing heterocycle, and a carbonyl-containing group preferably comprises both the reaction step A and the reaction step B. In this method, the reaction step B may be included either as a step to be simultaneously conducted with the reaction step A or as a step to be conducted before or after the reaction step A, while the reaction B is preferably included as a step to be conducted after the reaction step A.

On the other hand, the method for producing a thermoplastic elastomer (A) having a side chain containing a covalent crosslink site and a carbonyl-containing group may be a method comprising the step of reacting the elastomeric polymer with a compound capable of introducing a cyclic acid anhydride group as will be described below (hereinafter referred to as "reaction step C"), or a method comprising the step of further reacting the elastomeric polymer having a cyclic acid anhydride group in its side chain produced by such method with a compound capable of forming covalent bond (hereinafter referred to as "reaction step D") .

Next, the elastomeric polymer having a cyclic acid anhydride group in its side chain, the compound capable of introducing an imino group, the compound capable of introducing a nitrogen-containing heterocycle, and the reaction steps A to D are described in detail. (Elastomeric polymer having a cyclic acid anhydride group in its side chain)

The elastomeric polymer having a cyclic acid anhydride group in its side chain is an elastomeric polymer wherein the cyclic acid anhydride group is bonded to an atomcomprisedin the main chain of the elastomeric polymer in a chemically stable manner (by covalent bond), and such "elastomeric polymer having a cyclic acid anhydride group in its side chain" is produced by reacting the elastomeric polymer with the compound capable of introducing the cyclic acid anhydride group.

Exemplary compounds capable of introducing the cyclic acid anhydride group include cyclic acid anhydrides such as succinic anhydride, maleic anhydride, glutaric anhydride, and phthalic anhydride.

In the present invention, the elastomeric polymer having a cyclic acid anhydride group in its side chain may be produced by the method commonly used in the art, for example, by graft polymerizing of the elastomeric polymer with a cyclic acid anhydride under the conditions commonly used in the art, for example, by stirring with heating. Alternatively, such polymer may comprise a commercially available product.

Exemplary commercially available products include maleic anhydride-modified isoprene rubbers such as LIR-403 (manufactured by Kuraray Co., Ltd.) and LIR-410A (prototype manufactured by Kuraray Co., Ltd.); modified isoprene rubbers such as LIR-410 (manufactured by Kuraray Co., Ltd.); carboxy-modified nitrile rubbers such as Clinac 110, 221, and 231 (manufactured by Polycer); carboxy-modified polybutenes such as CPIB (manufactured by Nippon Petrochemicals Co., Ltd.) and HRPIB (prototype manufactured by the laboratory of Nippon Petrochemicals Co., Ltd.); maleic anhydride-modified ethylene-propylene rubbers such as NUCREL (manufactured by Du Pont-Mitsui Polychemicals Co., Ltd.), Yukalon (manufactured by Mitsubishi Chemical Corporation), and Tafmer M (for example, MA8510 manufactured by Mitsui Chemicals, Inc.); maleic anhydride-modified ethylene-butene rubbers such as Tafmer M (for example, MH7020 manufactured by Mitsui Chemicals, Inc.); maleic anhydride-modified polyethylenes such as Adtex series (maleic anhydride-modified EVA and maleic anhydride-modified EMA manufactured by Japan Polyolefins Co., Ltd.), HPR series (maleic anhydride-modified EEA and maleic anhydride-modified EVA manufactured by Du Pont-Mitsui Polychemicals Co., Ltd.), Bondfast series (maleic anhydride-modified EMA manufactured by Sumitomo Chemical Co., Ltd.), Dumilan series (maleic anhydride-modified EVOH manufactured by Takeda Pharmaceutical Co., Ltd.), Bondine (maleic anhydride-modified EEA manufactured by ATOFINA), Toughtec (maleic anhydride-modified SEBS, M1943 manufactured by Asahi Kasei Corporation), Kraton (maleic anhydride-modified SEBS, FG1901X manufactured by Kraton Polymers), Toughprene (maleic anhydride-modified SBS, 912 manufactured by Asahi Kasei Corporation), Septon (maleic anhydride-modified SEPS (manufactured by Kuraray Co., Ltd.), Lexpearl (maleic anhydride-modified EEA, ET-182G, 224M, 234M manufactured by Japan Polyolefins Co., Ltd.), and Auroren (maleic anhydride-modified EEA, 200S, 250S manufactured by Nippon Paper Chemicals Co., LTD.); and maleic anhydride-modified polypropylenes such as Admer (for example, QB550, LF128 manufactured by Mitsui Chemicals, Inc.) .

### (Compound capable of introducing imino group)

The compound capable of introducing an imino group is not particularly limited as long as it is a compound having an imino group which does not constitute a part of a cyclic compound such as a heterocycle and another active hydrogen group (for example, hydroxy group, thiol group, and amino group) within its molecule. Examples include alkylamino alcohols such as N-methylaminoethanol, N-ethylaminoethanol, N-n-propylaminoethanol, N-n-butylaminoethanol, N-n-pentylaminoethanol, N-n-hexylaminoethanol, N-n-heptylaminoethanol, N-n-octylaminoethanol, N-n-nonylamihoethanol, N-n-decylaminoethanol, N-n-undecylaminoethanol, N-n-dodecylaminoethanol, N-(2-ethylhexyl)aminoethanol, N-methylaminopropanol, N-methylaminobutanol; aromatic aminoalcohols such as N-phenylaminoethanol, N-toluic aminoethanol, N-phenylaminopropanol, and N-phenylaminobutanol; alkylaminothiols such as N-methylaminoethanethiol, N-ethylaminoethanethiol, N-n-propylaminoethanethiol, N-n-butylaminoethanethiol, N-methylaminopropanethiol, and N-methylaminobutanethiol; aromatic aminothiols such as N-phenylaminoethanethiol, N-toluic aminoethanethiol, N-phenylaminopropanethiol, and N-phenylaminobutanethiol; alkyldiamines such as N-methylethylenediamine, N-ethylethylenediamine, N-n-propylethylenediamine, N-methylpropanediamine, N-ethylpropanediamine, N-methylbutanediamine, N,N'-dimethylethylenediamine, and N,N'-diethylethylenediamine; and aromatic diamines such as N-phenylethylenediamine, N-phenylpropanediamine, N-phenylbutanediamine, and N,N'-diphenylethylenediamine.

Among these, the preferred are N-n-butylaminoethanol, N-n-octylaminoethanol, and N-n-dodecyl aminoethanol.

### (Compound capable of introducing a nitrogen-containing heterocycle)

The compound capable of introducing the nitrogen-containing heterocycle may be the nitrogen-containing heterocycle itself as mentioned above, or a nitrogen-containing heterocycle having a substituent (for example, hydroxy group, thiol group, or amino group) which reacts with the maleic anhydride or other cyclic acid anhydride group.

### (Reaction step A)

The reaction step A is the step wherein a compound capable of introducing an imino group is mixed with an elastomeric polymer having a cyclic acid anhydride group in its side chain to promote the reaction (ring opening of the cyclic acid anhydride group) at a temperature (for example, 60 to 250°C) allowing the chemical bonding of the compound and the cyclic acid anhydride group. The resulting thermoplastic elastomer will then have a structure represented by the formula (2) or (3) in its side chain.

In this reaction step, the compound capable of introducing an imino group may be reacted with a part or all of the cyclic acid anhydride group in the side chain of the elastomeric polymer. "A part" herein preferably means 1% by mole or more, more preferably 10% by mole or more, and most preferably 30% by mole or more in relation to 100% by mole of the cyclic acid anhydride group so that the resulting composition will enjoy sufficient physical properties (for example, failure properties) and improved resistance to compression set.

### (Reaction step B)

The reaction step B is the step wherein a compound capable of introducing nitrogen-containing heterocycle is mixed with an elastomeric polymer having a cyclic acid anhydride group in its side chain to promote the reaction (ring opening of the cyclic acid anhydride group) at a temperature (for example, 60 to 250°C) allowing the chemical bonding of the compound and the cyclic acid anhydride group. The resulting thermoplastic elastomer will then have a structure represented by the formula (5) or (6) in its side chain.

In this reaction step, the compound capable of introducing a nitrogen-containing heterocycle may be reacted with a part or all of the cyclic acid anhydride group in the side chain of the elastomeric polymer. "A part" herein preferably means 1% by mole or more, more preferably 50% by mole or more, and most preferably 80% by mole or more in relation to 100% by mole of the cyclic acid anhydride group so that the resulting composition will enjoy the merit of introducing the nitrogen-containing heterocycle and improved mechanical strength such as tensile strength after crosslinking.

When the compound capable of introducing an imino group and the compound capable of introducing a nitrogen-containing heterocycle are used together, the method will include both the reaction step A and the reaction step B. In such a case, the compound capable of introducing animino group and the compound capable of introducing a nitrogen-containing heterocycle may be reacted with a part or all of the cyclic acid anhydride group in the side chain of the elastomeric polymer. The reaction degree of each compound with the cyclic acid anhydride group is not particularly, limited. However, the reaction degree of these compounds (in total) are preferably 1% by mole or more, more preferably 50% by mole or more, and most preferably 80% by mole or more in relation to 100% by mole of the cyclic acid anhydride group so that the resulting composition will enjoy improved tensile properties, resistance to compression set, and tensile strength after crosslinking without detracting from the recyclability.

The ratio of reaction degree with the cyclic acid anhydride group of each compound (compound capable of introducing an imino group : compound capable of introducing a nitrogen-containing heterocycle) is preferably 1:99 to 99:1, more preferably 10:90 to 99:1, and most preferably 20:80 to 90:10.

### (Reaction step C)

The reaction step C is the step wherein an elastomeric polymer is reacted with a compound capable of introducing a cyclic acid ahydride group to produce an elastomeric polymer having a cyclic acid anhydride group in its side chain.

### (Reaction step D)

The reaction step D is the step wherein an elastomeric polymer having a cyclic acid anhydride group in its side chain is mixed with a compound capable of forming a covalent bond to promote the reaction (ring opening of the cyclic acid anhydride group) at a temperature (for example, 60 to 250°C) allowing the chemical bonding of the cyclic acid anhydride group and the compound. The resulting thermoplastic elastomer will then have a structure represented by any one of the formulae (10) to (12) in its side chain.

In this reaction step, the compound capable of forming covalent bond may be reacted with a part or all of the cyclic acid anhydride group in the side chain of the elastomeric polymer. "A part" herein preferably means 1% by mole or more, more preferably 10% by mole or more, and most preferably 30% by mole or more in relation to 100% by mole of the cyclic acid anhydride group so that the resulting composition will enjoy sufficient physical properties (for example, failure properties) and improved resistance to compression set.

The production method as described above may be accomplished, for example, by mixing the elastomeric polymer having a cyclic acid anhydride group in its side chain with a compound capable of introducing an imino group and/or a compound capable of introducing a nitrogen-containing heterocycle at 60 to 250°C with a roller, kneader, pressurized kneader, Banbury mixer, single screw extruder, twin screw extruder, or universal blender.

In the production method as described above, each group (structure) in the side chains of the thermoplastic elastomer, namely, the unreacted cyclic acid anhydride group and the structures represented by the formulae (2), (3), (5), (6), and the like may be confirmed by the analysis means commonly used in the art such as NMR and IR spectrum.

### <Ethylene-propylene copolymer (B)>

The ethylene-propylene copolymer (B) used in the composition of the first aspect of the present invention is a copolymer comprising a propylene block and an ethylene propylene block, and more specifically, a block copolymer comprising a block comprising a polypropylene component (propylene block) and a block comprising a propyleneethylene random copolymer component (ethylene propylene block) .

As a result of including such ethylene-propylene copolymer (B), the resulting thermoplastic elastomer composition enjoys excellent high temperature flowability and mechanical strength while retaining the excellent flexibility. It is estimated that the presence of the propylene block having high crystallinity and high hardness contributes to the improvement of heat resistance, modulus, and mechanical strength such as breaking strength, while the presence of the ethylene propylene block which is a random copolymer contributes for the improvement of flexibility and high temperature flowability.

In the first aspect of the present invention, the ethylene-propylene copolymer (B) preferably contains the propylene block at a content of 1 to 50% by mole, and more preferably at a content of 10 to 25% by mole. When the content of the propylene block is within such range, the composition of the present invention containing the ethylene-propylene copolymer (B) will exhibit excellent mechanical strength.

Furthermore, in the first aspect of the present invention, the propylene block is preferably stereoregular in view of improving the mechanical strength of the composition of the first aspect of the present invention containing the ethylene-propylene copolymer (B). Preferably, the propylene block is also isotactic in view of further improving the mechanical strength of the resulting composition.

In the first aspect of the present invention, the ethylene propylene block may optionally contain up to about 5% by weight of components such as polybutene other than the propylene and the ethylene.

In the first aspect of the present invention, the content of the ethylene-propylene copolymer (B) is preferably 1 to 200 parts by mass, and more preferably 30 to 150 parts by mass in relation to 100 parts by mass of the thermoplastic elastomer (A). When the content of the ethylene-propylene copolymer (B) is within such range, the composition of the first aspect of the present invention containing the ethylene-propylene copolymer (B) will exhibit improved high temperature flowability and mechanical strength while retaining the flexibility.

Flexible materials comprising a polyolefin resin has been produced by mixing an amorphous ethylene-propylene rubber (EPR) or the like that had been produced by using a vanadium catalyst with polypropylene.

In contrast, the ethylene-propylene copolymer (B) used in the first aspect of the present invention is preferably produced by simultaneously polymerizing the polypropylene component and the elastomeric propyleneethylene random copolymer component in the same polymerization tank by using a titanium compound or an organoaluminum compound. Alternatively, the ethylene-propylene copolymer (B) may be produced by introducing the separately synthesized polypropylene in a tank, and subsequently introducing the ethylene and the propylene for polymerization in the presence of catalyst.

Such ethylene-propylene copolymer (B) is preferably a reactor-type copolymer having an increased content of the ethylene component in the ethylene-propylene block. Preferable examples include Prime TPO (flexible type) manufactured by Prime Polymer Co., Ltd. such as those sold under the trade name of M142E.

### <Styrene thermoplastic elastomer>

The styrene thermoplastic elastomer which is incorporated in the composition of the second aspect of the present invention and optionally incorporated in the composition of the first aspect of the present invention may be any known styrene thermoplastic elastomer produced as a block copolymer from an aromatic vinyl compound and a conjugated diene.

In the present invention, the styrene thermoplastic elastomer used is preferably the one having the site of block polymerization (corresponding to the crosslink site) with the aromatic vinyl compound at its end in view of improving the resistance to compression set. The styrene thermoplastic elastomer used in the first aspect of the present invention is preferably the one having a weight average molecular weight of 100,000 or more, and the styrene thermoplastic elastomer used in the second aspect of the present invention is the one having a weight average molecular weight of 100,000 or more.

Exemplary aromatic vinyl compounds include styrene, α-methylstyrene, 3-methylstyrene, and 4-propylstyrene which may be used alone or in combination of two or more.

Examples of the conjugated diene include butadiene, isoprene, and mixtures thereof.

When such styrene thermoplastic elastomer is incorporated in a thermoplastic elastomer composition, the resulting composition exhibits favorable resistance to compression set presumably because the styrene thermoplastic elastomer is incompatible, less flowable, and forms an independent phase while it has high affinity for oils, and as a result, the styrene thermoplastic elastomer and the oil will be incorporated in the crosslinkage structure of the thermoplastic elastomer (A) with the oil absorbed in the styrene thermoplastic elastomer.

In the present invention, the production method of the styrene thermoplastic elastomer is not particularly limited. However, a preferable production method is production of the styrene thermoplastic elastomer by copolymerization (block copolymerization) of the polymer (block (A)) produced by polymerizing the aromatic vinyl compound and the polymer (block (B)) produced by polymerizing the conjugated diene.

The block (A) may preferably have a number average molecular weight of 3000 to 50000. When the molecular weight is within such range, the resulting styrene thermoplastic elastomer exhibits good mechanical strength, and the composition of the present invention produced by using the styrene thermoplastic elastomer exhibits improved resistance to compression set.

The block (B) may preferably have a number average molecular weight of 10000 to 200000. When the molecular weight is within such range, the resulting styrene thermoplastic elastomer exhibits favorable viscosity upon mixing and melting in the course of producing the composition of the present invention using the styrene thermoplastic elastomer, and the resulting composition of the present invention will also exhibit favorable viscosity upon mixing and melting.

The styrene thermoplastic elastomer produced as a block copolymer has one or more blocks (A) and one or more blocks (B), and the block formation may be A-(B-A)ₙ or (A-B)ₘ, and among these block formations, A-B-A is favorable in view of the improved flowability and mechanical properties. Combination of A-B and A-B-A is also favorable.

In the present invention, the styrene thermoplastic elastomer may preferably have a styrene content of 10 to 60% by mass, and more preferably 30 to 50% by mass. When the styrene content is within such range, the composition of the present invention will exhibit favorable viscosity upon mixing and melting in the production of the composition of the present invention, and the resulting composition of the present invention will exhibit improved mechanical strength and resistance to compression set.

Examples of such styrene thermoplastic elastomer include hydrogenated styrene-isoprene block copolymer (SEPS, styrene-ethylene-propylene-styrene block copolymer), styrene-ethylene-ethylene-propylene-styrene block copolymer (hereinafter referred to as "SEEPS"), and styrene-ethylenebutylene-styrene block copolymer (hereinafter referred to as "SEBS").

In the present invention, the styrene thermoplastic elastomer used may be a commercially available product such as Septon 2006 (SEPS manufactured by Kuraray Co., Ltd.) or Septon 4055 (SEEPS manufactured by Kuraray Co., Ltd.).

In the composition of the present invention, the content of the styrene thermoplastic elastomer is preferably 1 to 500 parts by mass, more preferably 30 to 200 parts by mass, and most preferably 50 to 150 parts by mass in relation to 100 parts by mass of the thermoplastic elastomer (A). When the content of the styrene thermoplastic elastomer is within such range, the resulting composition of the present invention will exhibit improved mechanical strength and resistance to compression set.

### <Plasticizer>

The plasticizer which is incorporated in the composition of the second aspect of the present invention and optionally incorporated in the composition of the first aspect of the present invention is not particularly limited, and any known plasticizer commonly used in a resin composition or in a rubber composition may be employed.

Examples include oils such as paraffin oil, process oil, aroma oil; liquid rubbers such as liquid polyisoprene (LIR), liquid polybutadiene (LBR), and liquid ethylene-propylene rubber (LEPM); tetrahydrophthalic acid, azelaic acid, benzoic acid, phthalic acid, trimellitic acid, pyromellitic acid, adipic acid, sebacic acid, fumaric acid, maleic acid, itaconic acid, citric acid, and derivatives thereof; dioctyl phthalate (DOP) and dibutyl phthalate (DBP); polybutene; dioctyl adipate and isodecyl succinate; diethylene glycol dibenzoate and pentaerythritol ester; butyl oleate, and methyl acetylricinolate; tricredyl phosphate and trioctyl phosphate; and adipic acid propylene glycol polyester and adipic acid butylene glycol polyester.

Among these, use of an oil or polybutene is preferred in view of oil bleed prevention and high temperature flowability.

The plasticizer may be used either alone or in combination of two or more. When two or more plasticizers are used, they may be mixed at a ratio adequately selected depending on the application of the composition of the present invention, physical properties required for the composition of the present invention, and the like.

Such plasticizer is preferably used at a content of 1 to 500 parts by mass, more preferably at 5 to 300 parts by mass, and still more preferably at 10 to 200 parts by mass per 100 parts by mass of the thermoplastic elastomer (A). When the content of the plasticizer is within such range, the resulting composition of the present invention will enjoy excellent flexibility and high temperature flowability (workability).

In the composition of the present invention, the thermoplastic elastomer (A) is incorporated with the styrene thermoplastic elastomer and the plasticizer, and therefore, the resulting composition exhibits favorable mechanical strength, in particular, resistance to compression set while retaining the excellent recyclability presumably because the styrene thermoplastic elastomer is incompatible, less flowable, and forms an independent phase while it has high affinity for oils, and as a result, the styrene thermoplastic elastomer and the oil will be incorporated in the crosslinkage structure of the thermoplastic elastomer (A) with the oil absorbed in the styrene thermoplastic elastomer. It is to be noted that the resistance to compression set will also be improved by the same mechanism if the resin incorporated were a polyolefin resin such as polypropylene (PP) or ethylene-propylene-diene rubber (EPDM). However, since a thermoplastic elastomer (A) is used in the present invention, the resistance to compression set will be improved to a greater extent together with the mechanical strength when compared to the incorporation of such polyolefin resin. In particular, use of a thermoplastic elastomer (A) having a side chain containing an imino group and a carbonyl-containing group (and more specifically, a thermoplastic elastomer having the side chain having the structure represented by the formula (1) or the formula (2) or (3)) is preferable in view of the improved tensile strength and resistance to compression set of the composition after crosslinking, and use of a thermoplastic elastomer having a side chain containing an imino group, a nitrogen-containing heterocycle, and a carbonyl-containing group is more preferable in view of further improvement in the mechanical strength such as tensile strength in addition to the improvement of the tensile strength after crosslinking and resistance to compression set of the composition.

This latter preferred embodiment includes the case wherein the imino group and the nitrogen-containing heterocyclic group are both contained in the same side chain together with the carbonyl-containing group as well as embodiments wherein the elastomeric polymer has at least two types of side chains, one type containing an imino group a carbonyl-containing group, the other type containing a nitrogen-containing heterocyclic group and a carbonyl-containing group.

If necessary, the composition of the present invention may optionally contain a polymer other than the thermoplastic elastomer (A), the ethylene-propylene copolymer (B), and the styrene thermoplastic elastomer, a reinforcing agent (filler), a filler having an amino group introduced therein (hereinafter simply referred to as "amino group-introduced filler"), an amino group-containing compound other than the amino group-introduced filler, a compound containing a metal element (hereinafter simply referred to as "metal compound"), maleic anhydride-modified polymer, an antiaging agent, an antioxidant, a pigment (dye), a thixotropic agent, a UV absorbent, a flame retardant, a solvent, a surfactant (including leveling agent), a dispersant, a dehydrating agent, an anticorrosive, an adhesion promoter, an antistatic, a filler, and other additives to the degree to which the object of the present invention is not impaired. Such polymers and additives used may be those commonly used in the art, and some examples will be described below. The polymers and the additives, however, are not limited to those described below.

Exemplary non-limiting fillers include known fillers commonly used in resin compositions and rubber compositions. Examples include carbon black, silica, iron oxide, zinc oxide, aluminum oxide, titanium oxide, barium oxide, magnesium oxide, calcium carbonate, magnesium carbonate, zinc carbonate, roseki clay, kaolin clay, calcined clay, filler having an amino group introduced therein (hereinafter simply referred to as "amino group-introduced filler"), which may be used alone or in combination of two or more.

Addition of such a filler enables production of a thermoplastic elastomer composition having an improved mechanical strength.

The composition of the present invention preferably contains at least one member selected from the group consisting of carbon black, silica, and calcium carbonate. In one preferred embodiment of the present invention, the composition contains carbon black and/or silica.

The type of the carbon black used may be selected depending on the application of the composition. Carbon black is generally classified into hard carbon and soft carbon based on the particle size. Soft carbon has a relatively weak reinforcement ability on rubbers whereas hard carbon has a stronger reinforcement ability on the rubbers.

Such carbon black is incorporated (when the carbon black is incorporated alone) at a content of 1 to 200 parts by mass, preferably at a content of 10 to 100 parts by mass, and more preferably 20 to 80 parts by mass in relation to 100 parts by mass of the thermoplastic elastomer (A).

The silica incorporated is not particularly limited, and exemplary silicas include fumed silica, calcined silica, precipitated silica, pulverized silica, molten silica, and diatomaceous earth. Such silica is incorporated (when the silica is incorporated alone) at a content of 1 to 200 parts by mass, preferably at a content of 10 to 100 parts by mass, and more preferably at a content of 20 to 80 parts by mass in relation to 100 parts by mass of the thermoplastic elastomer (A).

When silica is used for the filler, it may be used in combination with a silane coupling agent. Exemplary silane coupling agents include bis(triethoxysilylpropyl) tetrasulfide (Si69), bis(triethoxysilylpropyl) disulfide (Si7.5), γ-mercaptopropyl trimethoxysilane, and vinyl trimethoxysilane, and an aminosilane compound as described below may also be employed.

The calcium carbonate incorporated is not particularly limited, and examples of the calcium carbonate incorporated include heavy calcium carbonate, precipitated calcium carbonate (light calcium carbonate), colloidal calcium carbonate, and a surface treated calcium carbonate produced by treating the surface of the calcium carbonate with a fatty acid, a resin acid, a fatty acid ester, a higher alcohol adduct of an isocyanate compound.

Such calcium carbonate is preferably incorporated (when the calcium carbonate is incorporated alone) at a content of 1 to 200 parts by mass, preferably at a content of 10 to 100 parts by mass, and more preferably at 20 to 80 parts by mass in relation to 100 parts by mass of the thermoplastic elastomer (A). The calcium carbonate incorporated is preferably precipitated calcium carbonate.

When two or more of the carbon black, the silica, and the calcium carbonate are incorporated in combination, they may be incorporated at a total content of 1 to 200 parts by mass, preferably at a content of 10 to 100 parts by mass, and more preferably at a content of 20 to 80 parts by mass in relation to 100 parts by mass of the thermoplastic elastomer (A) of the present invention.

The composition of the present invention preferably contains an amino group-introduced filler as a filler. The filler which serves as the base of the amino group-introduced filler (hereinafter sometimes simply referred to as "base filler") include silicas such as fumed silica, calcined silica, precipitated silica, ground silica, molten silica, and diatomaceous earth; carbon black, iron oxide, zinc oxide, titanium oxide, barium oxide, magnesium oxide, calcium carbonate, magnesium carbonate, zinc carbonate, roseki clay, kaolin clay, and calcined clay. In view of ease of introducing the amino group and ease of adjusting the proportion of the amino group introduced (introduction rate), the preferred are silica, carbon black, and calcium carbonate, and the more preferred is silica.

The amino group introduced in the base filler (hereinafter sometimes simply referred to as "amino group") is not particularly limited, and exemplary amino groups include aliphatic amino groups, aromatic amino groups, heterocyclic amino groups, and mixtures of a plurality of such amino groups.

In the present invention, the amino group included in an aliphatic amine compound is referred to as the "aliphatic amino group", the amino group bonded to the aromatic group of an aromatic amine compound is referred to as the "aromatic amino group", and the amino group included in a heterocyclic amine compound is referred to as the "heterocyclic amino group".

Among these, the amino group is preferably a heterocyclic amino group, a mixed amino group containing a heterocyclic amino group, or an aliphatic amino group, and more preferably a heterocyclic amino group or an aliphatic amino group in view of the capability of undergoing an adequate interaction with the thermoplastic elastomer (A) and capability of effective dispersion in the thermoplastic elastomer.

The amino group is not particularly limited as to whether they are primary (-NH₂), secondary (imino group, >NH), tertiary (>N-), or quarternary (>N⁺<).

When the amino group is a primary amino group, the interaction with the thermoplastic elastomer (A) tends to be stronger, and gelation may take place depending on the conditions used in preparing the composition. On the other hand, when the amino group is a tertiary amino group, the interaction with the thermoplastic elastomer (A) tends to be weaker, and the effects of improving the resistance to compression set and the like of the resulting composition may be insufficient.

In view of such situation, the amino group is preferably either primary or secondary amino group, and more preferably secondary amino group.

In other words, the amino group is preferably a heterocyclic amino group, a mixed amino group containing a heterocyclic amino group, or a primary or secondary aliphatic amino group, and more preferably a heterocyclic amino group or a primary or secondary aliphatic amino group.

The base filler may have at least one amino group on its surface. However, the base filler may preferably have two or more amino groups on its surface in view of the superior effect of improving the resistance to compression set and other properties.

When the base filler has two or more amino groups, at least one of the two or more amino groups is preferably a heterocyclic amino group, and the base filler has more preferably a primary or secondary amino group (aliphatic amino group, aromatic amino group, or heterocyclic amino group).

The type and the classification (primary, secondary, tertiary or quaternary) of the amino group may be adequately selected depending on the physical properties required for the composition.

The amino group-introduced filler is produced by introducing the amino group in the base filler.

The method used for introducing the amino group is not particularly limited, and typical production methods are the surface treating methods (for example, the surface modifying method and the surface covering method) used in producing various fillers and reinforcements. Exemplary preferable methods include the method wherein a compound having a functional group capable of reacting with the base filler and the amino group is reacted with the base filler (surface modifying method); the method wherein the surface of the base filler is coated with a polymer having the amino group (surface covering method); and the method wherein a compound having the amino group is reacted with the filler in the step of the filler synthesis.

Such an amino group-introduced filler may be used either alone or in combination of two or more. When two or more amino group-introduced fillers are used in combination, their mixing ratio may be adequately selected depending on the application, the physical properties required, and the like of the composition of the present invention.

Suchan amino group-introduced filler is preferably used at a content of 1 to 200 parts by mass, more preferably at 10 parts by mass or more, and most preferably at 30 parts by mass or more per 100 parts by mass of the thermoplastic elastomer (A) when the amino group-introduced filler is used alone.

The filler other than carbon black, silica, calcium carbonate, and amino group-introduced filler is preferably incorporated at a content of 1 to 200 parts by mass, and more preferably at 20 to 80 parts by mass in relation to 100 parts by mass of the thermoplastic elastomer (A).

The polymer other than the thermoplastic elastomer (A), ethylene-propylene copolymer (B), and the styrene thermoplastic elastomer is preferably a polymer having a glass transition temperature of up to 25°C for the same reason as described above. Exemplary such polymers include natural rubber (NR), isoprene rubber (IR), polyethylene (PE), polypropylene (PP), butadiene rubber (BR), 1,2-butadiene rubber, styrene-butadiene rubber (SBR), acrylonitrile-butadiene rubber (NBR), butyl rubber (IIR), ethylene-propylene-diene rubber (EPDM), ethylene-propylene rubber (EPM), ethylene-acrylic rubber (AEM), and ethylene-butene rubber (EBM), and the preferred are the polymers having no unsaturated bond such as IIR, EPM, and EBM or the polymer having fewer unsaturated bonds such as EPDM. Also preferred are polymers having the moiety capable of undergoing hydrogen bond, and examples of such polymers include polyester, polylactone, and polyamide.

The composition of the present invention may contain either one polymer or two or more polymers other than the thermoplastic elastomer (A) and the ethylene-propylene copolymer (B), and such polymer is preferably incorporated at a content of 0.1 to 100 parts by mass, and more preferably at 1 to 50 parts by mass in relation to 100 parts by mass of the thermoplastic elastomer (A) of the present invention.

Next, the amino group-containing compound other the amino group-introduced filler is described.

The amino group in the amino group-containing compound may be basically the same as the one described for the amino group-introduced filler, and the number of amino groups is not particularly limited as long as the amino group-containing compound has at least one amino group. The amino group-containing compound, however, may preferably have two or more amino groups since the compound will then be capable of forming two or more crosslink bonds with the thermoplastic elastomer (A) to more effectively improve the physical properties.

The classification (primary, secondary, tertiary or quaternary) of the amino group in the amino group-containing compound is not particularly limited, and as in the case of the amino group-introduced filler, the amino group may be either primary (-NH₂), secondary (imino group, >NH), tertiary (>N-), or quarternary (>N⁺<) depending on the recyclability, resistance to compression set, mechanical strength, hardness and other physical properties required for the composition of the present invention. When a secondary amino group is selected, the amino group-containing compound is likely to have a superior mechanical strength, whereas the amino group-containing compound is likely to have a superior recyclability when a tertiary amino group is selected. Use of an amino group-containing compound having two secondary amino groups is particularly favorable since the resulting composition of the present invention will enjoy excellent and well-balanced recyclability and resistance to compression set.

When the amino group-containing compound has two or more amino groups, the number of primary amino groups in the compound is preferably up to two, and more preferably up to one. When the compound has three or more primary amino groups, the (crosslink) bond formed by these amino groups and the functional group (in particular carboxy group that is a carbonyl-containing group) of the thermoplastic elastomer (A) may become excessively firm to detract from the excellent recyclability.

In other words, the classification of the amino group, the number of amino groups, and the structure of the amino group-containing compound may be adequately adjusted and selected depending on the bond strength and the like of the functional group of the thermoplastic elastomer (A) and the amino groups in the amino group-containing compound.

Exemplary preferable amino group-containing compounds include secondary aliphatic diamines such as N,N'-dimethylethylenediamine, N,N'-diethylethylenediamine, N,N'-diisopropylethylenediamine, N,N'-dimethyl-1,3-propanediamine, N,N'-diethyl-1,3-propanediamine, N,N'-diisopropyl-1,3-propanediamine, N,N'-dimethyl-1,6-hexanediamine, N,N'-diethyl-1,6-hexanediamine, and N,N',N " -trimethyl bis(hexamethylene)triamine; tertiary aliphatic diamines such as tetramethyl-1,6-hexanediamine; polyamines containing an aromatic primary amine and a heterocyclic amine such as aminotriazole, and aminopyridine; straight chain alkylmonoamines such as dodecylamine; and tertiary heterocyclic diamines such as dipyridyl since they are highly effective in improving resistance to compression set, mechanical strength, and the like.

Among these, the preferred are secondary aliphatic diamines, polyamines containing aromatic primary amine and heterocyclic amine, and tertiary heterocyclic diamines.

In addition to those mentioned above, the amino group-containing compound may also be a macromolecular compound having an amino group.

The macromolecular compound having the amino group is not particularly limited, and exemplary such compounds include polymers such as polyamide, polyurethane, urea resin, melamine resin, polyvinylamine, polyallylamine, polyacrylamide, polymethacrylamide, polyaminostyrene, and amino group-containing polysiloxane, and polymers prepared by modifying various polymers with a compound having an amino group.

These polymers are not particularly limited for their average molecular weight, molecular weight distribution, viscosity, and other physical properties, and the physical properties may be adequately selected depending on the application and the physical properties required for the composition of the present invention.

The macromolecular compound having the amino group is preferably a polymer produced by polymerizing (through polyaddition or polycondensation) a condensable or polymerizable compound (monomer) having the amino group. More preferably, the macromolecular compound having the amino group is an amino group-containing polysiloxane which is a homo-condensation product of a silyl compound having a hydrolyzable substituent and the amino group, or a co-condensation product of such silyl compound with a silyl compound having no amino group, in view of availability, ease of production, ease of adjusting the molecular weight, ease of adjusting the introduction rate of the amino group, and the like.

The silyl compound having the hydrolyzable substituent and the amino group is not particularly limited, and exemplary compounds include aminosilane compounds including aminosilane compounds having an aliphatic primary amino group such as γ-aminopropyltrimethoxysilane, γ-aminopropyltriethoxysilane, γ-aminopropylmethyldimethoxysilane, γ-aminopropylmethyldiethoxysilane, and 4-amino-3,3-dimethylbutyl trimethoxysilane (these compounds being manufactured by Nippon Unicar Co., Ltd.); aminosilane compounds having an aliphatic secondary amino group such as N,N-bis[(3-trimethoxysilyl)propyl]amine, N,N-bis[(3-triethoxysilyl)propyl]amine, N,N-bis[(3-tripropoxysilyl)propyl]amine (these compounds being manufactured by Nippon Unicar Co., Ltd.), 3-(n-butylamino)propyltrimethoxysilane (Dynasilane 1189 manufactured by Degussa-Hüls), and N-ethyl-aminoisobutyltrimethoxysilane (Silquest A-Link 15 silane manufactured by OSi Specialities); aminosilane compounds having an aliphatic primary and an aliphatic secondary amino group such as N-β(aminoethyl)γ-aminopropylmethyldimethoxysilane, N-β(aminoethyl)γ-aminopropyltrimethoxysilane, and N-β(aminoethyl)γ-aminopropyltriethoxysilane (manufactured by Nippon Unicar Co., Ltd.); aminosilane compounds having an aromatic secondary amino group such as N-phenyl-γ-aminopropyltrimethoxysilane (manufactured by Nippon Unicar Co., Ltd.); and aminosilane compounds having a heterocyclic amino group such as imidazole trimethoxysilane (manufactured by Japan Energy Corporation) and triazole silane produced by reacting aminotriazole with an epoxysilane compound, an isocyanate silane compound, or the like in the presence or absence of the catalyst at a temperature equal to room temperature or higher temperature.

Among these, the preferred are aminoalkylsilane compounds such as aminosilane compound having an aliphatic primary amino group, the aminosilane compound having an aliphatic secondary amino group, and the aminosilane compound having an aliphatic primary and an aliphatic secondary amino group in view of their high effectivity in improving the resistance to compression set and other physical properties.

The silyl compound having no amino group is not particularly limited as long as it is a compound which is different from the silyl compound having a hydrolyzable substituent and the amino group, and it does not contain the amino group, and exemplary such compounds include alkoxysilane compounds and halogenated silane compounds. Among these, the preferred are alkoxysilane compounds in view of their availability, ease of handling, and excellent physical properties of the resulting co-condensation product.

Exemplary alkoxysilane compounds include tetramethoxysilane, tetraethoxysilane, tetrabuthoxysilane, tetraisopropoxysilane, methyltrimethoxysilane, methyltriethoxysilane, methyltributhoxysilane, methyltriisopropoxysilane, phenyltrimethoxysilane, and dimethyldimethoxysilane.

Exemplary halogenated silane compounds include tetrachlorosilane and vinyl trifluorosilane.

Among these, the preferred are tetraethoxysilane and tetramethoxysilane in view of their low price and safety in handling.

The silyl compounds having a hydrolyzable substituent and the amino group and the silyl compounds having no amino group may be used either alone or in combination of two or more.

Such macromolecular compounds having the amino group may be used either alone or in combination of two or more. When two or more such macromolecular compounds having the amino group are used in combination, their mixing ratio may be adequately selected depending on the application, the physical properties required, and the like of the composition of the present invention.

The content of the macromolecular compound having an amino group can be defined by the number (equivalent) of the nitrogen atoms in the compound in relation to the side chain of the thermoplastic elastomer (A) of the present invention as in the case of the amino group-containing compound as described above. However, there may exist some amino groups incapable of effectively undergoing interaction with the thermoplastic elastomer depending on the structure, molecular weight, and the like of the macromolecular compound.

Accordingly, the macromolecular compound having the amino group is preferably used at a content of 1 to 200 parts by mass, more preferably at 5 parts by mass or more, and most preferably at 10 parts by mass or more per 100 parts by mass of the thermoplastic elastomer (A).

The metal compound is not particularly limited as long as it is a compound containing at least one metal element, and the metal compound is preferably a compound containing at least one metal element selected from the group consisting of Li, Na, K, Ti, V, Cr, Mn, Fe, Co, Ni, Cu, Zn, Ga, and Al.

Exemplary metal compounds include a salt of a saturated aliphatic acid such as formate, acetate, or stearate; a salt of an unsaturated aliphatic acid such as (meth)acrylate; a metal alkoxide (a reaction product with an alcohol containing 1 to 12 carbon atoms); nitrate, carbonate, hydrogencarbonate, chloride, oxide, hydroxide, and a complex with a diketone.

The "complex with a diketone" used herein designates a complex formed by coordination of a metal atom with, for example, a 1,3-diketone (for example, acetyl acetone).

Among these, the metal element is preferably Ti, Al, or Zn, and the metal compound is preferably a salt of a saturated aliphatic acid containing 1 to 20 carbon atoms such as acetate or stearate, metal alkoxide (a reaction product with an alcohol containing 1 to 12 carbon atoms), oxide, hydroxide, and a complex with a diketone of such metal, and more preferably a salt of a saturated aliphatic acid containing 1 to 20 carbon atoms such as stearate, a metal alkoxide (a reaction product with an alcohol containing 1 to 12 carbon atoms), and a complex with a diketone of such metal.

The metal compounds may be used either alone or in combination of two or more. When two or more metal compounds are used in combination, their mixing ratio may be adequately selected depending on the application, the physical properties required, and the like of the composition of the present invention.

Such metal compound is preferably used at a content of 0.05 to 3.0 equivalents, more preferably at 0.1 to 2.0 equivalents, and most preferably at 0.2 to 1.0 equivalents in relation to the carbonyl group in the thermoplastic elastomer (A). When the content of the metal compound is within such range, the resulting composition of the present invention will enjoy improved physical properties such as resistance to compression set, mechanical strength and hardness.

The metal compound may be any one of the possible hydroxides, metal alkoxides, and carboxylates of the metal. For example, in the case of hydroxide, the metal compound in the case where the metal is iron may be either Fe(OH)₂ or Fe(OH)₃, and these metal compounds may be used either alone or as a mixture.

As described above, the metal compound is preferably a compound containing at least one metal element selected from the group consisting of Li, Na, K, Ti, V, Cr, Mn, Fe, Co, Ni, Cu, Zn, Ga, and Al. However, the compound may also contain a metal element other than such metal elements in an amount that does not adversely affect the merits of the present invention. Although the content of the metal element other than such metal element is not particularly limited, such metal element is preferably incorporated at 1 to 50% by mole in relation to all metal elements in the metal compound.

The maleic anhydride-modified polymer is a polymer produced by modifying the elastomeric polymer as described above with maleic anhydride. Although the side chain of the maleic anhydride-modified polymer may contain a functional group other than the maleic anhydride residue and the nitrogen-containing heterocycle, the side chain preferably contains only the maleic anhydride residue.

The maleic anhydride residue is introduced (for modification) in the side chain or at the terminal of the elastomeric polymer, and not to the main chain of the elastomeric polymer. In addition, the maleic anhydride residue is a cyclic acid anhydride group, and this cyclic acid anhydride group (moiety) will not undergo ring opening.

Accordingly, exemplary maleic anhydride-modified thermoplastic polymer is the thermoplastic elastomer having cyclic acid anhydride group but not nitrogen-containing heterocycle in the side chain as shown in the following formula (41) as produced by the reaction of ethylenic unsaturated bond of the maleic anhydride with the elastomeric polymer, and examples are those mentioned above for the elastomeric polymer having a cyclic acid anhydride group in its side chain.

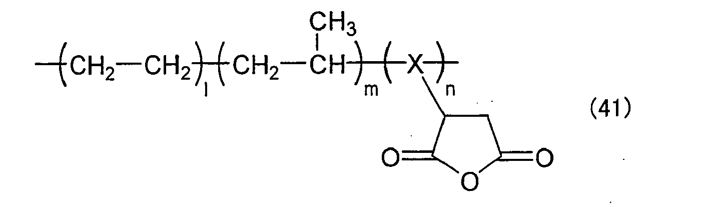

In the formula, X represents ethylene residue or propylene residue, and 1, m, and n independently represent a number of 0.1 to 80.

The degree of the maleic anhydride modification is preferably 0.1 to 50% by mole, more preferably 0.3 to 30% by mole, and most preferably 0.5 to 10% by mole per 100% by mole of the main chain moiety of the elastomeric polymer in view of the ability of improving the resistance to compression set without adversely affecting the recyclability.

The maleic anhydride-modified polymers may be used either alone or in combination of two or more. When two or more maleic anhydride-modified polymers are used in combination, their mixing ratio may be adequately selected depending on the application, the physical properties required, and the like of the composition of the present invention.

Such maleic anhydride-modified polymer is preferably used at a content of 1 to 100 parts by mass, and more preferably at 5 to 50 parts by mass per 100 parts by mass of the thermoplastic elastomer (A). When the content of the maleic anhydride-modified polymer is within such range, the resulting composition of the present invention will enjoy excellent high temperature flowability and mechanical strength.

When the elastomeric polymer having the cyclic acid anhydride group on its side chain remains unreacted in the production of the thermoplastic elastomer of the present invention, and more specifically, in the reaction step A or B, the remaining elastomer modified with the carbonyl-containing group may be left unremoved from the composition of the present invention.

Exemplary antiaging agents include hindered phenol compounds and aliphatic and aromatic hindered amine compounds.

Exemplary antioxidants include butyl hydroxy toluene (BHT), and butylhydroxyanisole (BHA).

Exemplary pigments include inorganic pigments such as titanium dioxide, zinc oxide, ultramarine, iron red, lithopone, lead, cadmium, iron, cobalt, aluminum, hydrochloride, and sulfate; organic pigments such as azo pigment and copper phthalocyanine pigment.

Exemplary thixotropic agents include benton, silicic anhydride, silicic acid derivatives, and urea derivatives.

Exemplary UV absorbents include 2-hydroxy benzophenone UV absorbents, benzotriazole UV absorbents, and salicylic acid ester UV absorbents.

Exemplary flame retardants include phosphorus flame retardants such as TCP; halogenic flame retardants such as chlorinated paraffin and perchloropentacyclodecane; antimony flame retardants such as antimony oxide; aluminum hydroxide; and magnesium hydroxide.

Exemplary solvents include hydrocarbons such as hexane and toluene; halogenated hydrocarbons such as tetrachloromethane; ketones such as acetone and methyl ethyl ketone; ethers such as diethylether and tetrahydrofuran; and esters such as ethyl acetate.

Exemplary surfactants (leveling agent) include polybutyl acrylate, polydimethylsiloxane, modified silicone compound, and fluorosurfactants.

Exemplary dehydrating agents include vinylsilane.

Exemplary anticorrosives include rust preventive pigments such as zinc phosphate, tannic acid derivatives, phosphoric acid esters, and basic sulfonates.

Exemplary adhesion promoters include known silane coupling agents, silane compounds containing an alkoxysilyl group, titanium coupling agents, and zirconium coupling agents, and more specifically, trimethoxy vinylsilane, vinyltriethoxysilane, vinyl tris(2-methoxyethoxy)silane, γ-methacryloxypropyltrimethoxysilane, and 3-glycidoxypropyltrimethoxysilane.

Exemplary antistatic agents generally include quaternary ammonium salts, and hydrophilic compounds such as polyglycols and ethylene oxide derivatives.

Preferably, the additives as described above may be incorporated at a content of 0.1 to 30 parts by mass, more preferably at 0.1 to 10 parts by mass, further more preferably at 1 to 10 parts by mass, and still more preferably at 1 to 5 parts by mass, in relation to 100 parts by mass of the thermoplastic elastomer (A) unless otherwise noted.

Some of the thermoplastic elastomers (A) are self-crosslinkable. The thermoplastic elastomers of the present invention, however, may optionally contain a vulcanizer, a vulcanization aid, a vulcanization accelerator, a retarder, and the like as long as the merit of the present invention is not impaired.

Exemplary vulcanizers include sulfur vulcanizers, organic peroxide vulcanizers, metal oxide vulcanizers, phenol resin vulcanizers, and quinone dioxime vulcanizers.

Exemplary sulfur vulcanizers include powdered sulfur, precipitated sulfur, highly dispersible sulfur, surface treated sulfur, insoluble sulfur, dimorpholine disulfide, and alkyl phenol disulfides.

Exemplary organic peroxide vulcanizers include benzoyl peroxide, t-butylhydroperoxide, 2,4-dichlorobenzoylperoxide, 2,5-dimethyl-2,5-di(t-butylperoxy)hexane, and 2,5-dimethylhexane-2,5-di(peroxyl benzoate).

Other vulcanizers include magnesium oxide, litharge (lead oxide), p-quinone dioxime, tetrachloro-p-benzoquinone, p-dibenzoylquinone dioxime, poly-p-dinitrosobenzene, and methylenedianiline.

Exemplary vulcanization aids include zinc oxide, magnesium oxide, amines; aliphatic acids such as acetyl acid, propionic acid, butanoic acid, stearic acid, acrylic acid, and maleic acid; zinc salts of an aliphatic acid such as zinc acetylate, zinc propionate, zinc butanoate, zinc stearate, zinc acrylate, and zinc maleate.

Exemplary vulcanization accelerators include thiuram vulcanization accelerators such as tetramethylthiuram disulfide (TMTD) and tetraethylthiuram disulfide (TETD); aldehyde ammonia vulcanization accelerators such as hexamethylenetetramine; guanidine vulcanization accelerators such as diphenylguanidine; thiazole vulcanization accelerators such as 2-mercaptobenzothiazole and dibenzothiazyl disulfide (DM); and sulfenamide vulcanization accelerators such as N-cyclohexyl-2-benzothiazylsulfenamide and N-t-butyl-2-benzothiazylsulfenamide. An alkylphenol resin or its halide may also be employed.

Exemplary retarders include organic acids such as phthalic anhydride, benzoic acid, salicylic acid, and acetylsalicylic acid; nitroso compounds such as N-nitroso-diphenylamine, N-nitroso-phenyl-β-naphthylamine, and polymer of N-nitroso-trimethyl-dihydroquinoline; halides such as trichloromelanine; 2-mercaptobenzimidazole; and N-(cyclohexylthio)phthalimide (Santogard PVI).

Such vulcanizer is preferably incorporated at a content of 0.1 to 20 parts by mass, and more preferably at 1 to 10 parts by mass in relation to 100 parts by mass of the thermoplastic elastomer (A).

The vulcanization conditions used when the composition of the present invention is permanently crosslinked (by using a vulcanizer) are not particularly limited, and an adequate set of conditions may be selected depending on the components incorporated in the composition, and the like. An exemplary vulcanization condition is the vulcanization carried out at a temperature of 130 to 200°C for 5 to 60 minutes.

When the composition of the present invention is heated to a temperature of about 80 to 200°C, the three-dimensional crosslink (crosslink structure) will become dissociated and the thermoplastic elastomer will gain some softness and fluidity presumably because of weakening of the intermolecular and intramolecular interactions between the side chains.

When the composition of the present invention that has become softer and more fluid is kept at a temperature of 80°C or lower, the once dissociated three-dimensional crosslink (crosslink structure) will regain its crosslinking to become crosslinked. The recyclability of the thermoplastic elastomer composition of the present invention is realized by the repetition of such steps.

The production methods of the composition of the present invention is not particularly limited. In the first aspect of the present invention, the thermoplastic elastomer (A), the ethylene-propylene copolymer (B), and the optional additives, and in the second aspect of the present invention, the thermoplastic elastomer (A), the styrene thermoplastic elastomer, the plasticizer, and the optional additives may be mixed in a roller, kneader, pressurized kneader, Banbury mixer, single screw extruder, twin screw extruder, or universal blender to thereby produce the composition.

The composition of the present invention can be used in a variety of applications where rubbers have been used by taking advantage of, for example, their rubber elasticity. Use as a hot melt adhesive or as an additive incorporated in such a hot melt adhesive is also preferable since the thermoplastic elastomer is capable of improving the heat resistance and recyclability. The composition of the present invention is well adapted for use in automobile applications.

The automobile applications include use of the thermoplastic elastomer for tread, carcass, side wall, inner liner, undertread, belt, and other parts of tire; radiator grille, side molding, garnish (pillar, rear, and top of cowl), aero parts (air dam and spoiler), wheel cover, weather strip, cowbelt grille, air outlet louver, air scoop, hood bulge, parts of ventilation opening, barrier parts (overfender, side seal panel, molding (window, hood, and door belt), and marks in the exterior; weather strip of doors, lights, and wipers, glass run, glass run channel, and other parts of interior window frame; air duct hose, radiator hose, and brake hose; crank shaft seal, valve stem seal, head cover gasket, A/T oil cooler hose, mission oil seal, P/S hose, P/S oil seal, and other parts of lubrication oil system; fuel hose, emission control hose, inlet filler hose, diaphragm and other parts of fuel system; engine mount, intank pump mount, and other vibration isolating parts; CVJ boots, rack and pinion boots, and other boots; A/C hose, A/C seal, and other parts of air conditioner; timing belt, auxiliary belt, and other belt members; and windshield sealer, vinyl plastisol sealer, anaerobic sealer, body sealer, spot weld sealer, and other sealers.

The thermoplastic elastomer composition of the present invention may also be incorporated as an anti-flow agent in a resin or rubber which would undergo cold flow at room temperature to thereby prevent flow upon extrusion and cold flow.

The composition of the present invention containing carbon black and/or silica exhibits improved tensile strength, tear strength, and bending strength, and such composition is particularly adapted for use in tires, hoses, belts, sheets, vibration isolating rubbers, rollers, linings, rubber-coated cloths, sealants, gloves, fenders, medical rubbers (syringe gaskets, tubes, and catheters), gaskets (home appliances and construction materials), asphalt modifiers, hot melt adhesives, boots, grip members, toys, shoes, sandals, key pads, gears, cap linings of PET bottles, and the like.

The composition of the first aspect of the present invention exhibits excellent high temperature flowability and mechanical strength while retaining excellent flexibility compared to the conventional recyclable composition containing a thermoplastic elastomer. Accordingly, among the applications as mentioned above, such composition is adapted for use in the applications where the recyclability, the flexibility, and the mechanical strength are particularly required.

The composition of the second aspect of the present invention exhibits higher resistance to compression set while retaining equivalent recyclability and mechanical properties compared to the conventional recyclable composition containing a thermoplastic elastomer. Accordingly, among the applications as mentioned above, such composition is adapted for use in the application wherein the recyclability and the resistance to compression set are particularly required.

### EXAMPLES

Next, the present invention is described in further detail by referring to the Examples which by no means limit the scope of the present invention.

### 1. Examples of the composition of the first aspect of the present invention

### 1-1. Preparation of thermoplastic elastomer composition (1)

### (Examples 1-1 and 1-2 and Comparative Examples 1-1 and 1-2)

First, to a pressurized kneader adjusted to 200°C were added 80.0 g of maleic anhydride-modified ethylene-propylene copolymer (MP-0620 manufactured by Mitsui Chemicals, Inc., hereinafter abbreviated as "maleinized EPM") and 0.8 g of an antiaging agent (Irganox 1010 manufactured by NAGASE & CO., LTD.), and then, polypropylene (S119 manufactured by Prime Polymer Co., Ltd.) or ethylene-propylene copolymer B1 (M142E manufactured by Prime Polymer Co., Ltd.) or ethylene-propylene copolymer B2 (prototype) of the amount shown in parts by mass in Table 1 (40 g). The mixture was then kneaded for 5 minutes.

Next, 0.9 g of 4H-3-amino-1,2,4-triazole (ATA manufactured by Otsuka Chemical Co., Ltd.) was added and the mixture was kneaded for further 10 minutes to produce the thermoplastic elastomer composition. The composition was analyzed by IR to confirm that the composition contained a thermoplastic elastomer having triazole ring introduced therein.

### 1-2. Evaluation of thermoplastic elastomer composition (1)

The resulting thermoplastic elastomer compositions were evaluated for their hardness, tensile properties, and viscosity by the procedure as described below. The results are shown in Table 1.

### (1) JIS-A hardness

The resulting thermoplastic elastomer compositions were hot pressed at 200°C for 10 minutes to produce sheet samples having a thickness of 2 cm, length of 15 cm, and width of 15 cm. Three of the resulting sheet samples were placed on top of one another, and the laminate was hot pressed at 200°C for 20 minutes, and evaluated for the JIS-A hardness according to JIS K6253 using a spring-type hardness tester (Type A) at room temperature for 5 seconds.

### (2) Tensile properties

The thermoplastic elastomer compositions obtained were pressed at an elevated temperature of 180°C for 10 minutes to produce a sheet with a thickness of 2 mm.

No. 3 dumbbell test pieces were blanked out from this sheet, and tensile test was conducted according to JIS K6251 at a tensile rate of 500 mm/min to thereby measure 100% modulus (M₁₀₀) [MPa], 300% modulus (M₃₀₀) [MPa], breaking strength (T_{B}) [MPa], and elongation at break (E_{B}) [%] at room temperature (25°C).

The thermoplastic elastomer composition produced in Comparative Example 1-2 exhibited an elongation at break of 90%, and the 100% modulus and the 300% modulus are indicated in Table 1 as "-".

### (3) Viscosity

Capillary viscosity at 230°C and a shear rate of 243 (s⁻¹) was measured according to JIS K7199:1999 to evaluate high temperature flowability. The composition will exhibit excellent high temperature flowability when the composition has a capillary viscosity of 1000 Pa·s or less.

**Table 1**

| | Comparative Example 1-1 | Comparative Example 1-2 | Example 1-1 | Example 1-2 |
|---|---|---|---|---|
| Maleinized EPM | 100 | 100 | 100 | 100 |
| Polypropylene | | 50 | | |
| Ethylene-propylene copolymer B1 | | | 50 | |
| Ethylene-propylene copolymer B2 | | | | 50 |
| ATA | 1.1 | 1.1 | 1.1 | 1.1 |
| Antiaging agent | 1 | 1 | 1 | 1 |
| JIS A hardness | 54 | 84 | 84 | 61 |
| Tensile properties (at 25°C) | | | | |
| M₁₀₀ (MPa) | 1.4 | - | 2.1 | 1.9 |
| M₃₀₀ (MPa) | 1.8 | - | 5.0 | 4.5 |
| T_{B}(MPa) | 2.8 | 7.6 | 6.5 | 6.3 |
| E_{B} (%) | 810 | 90 | 400 | 450 |
| Capillary viscosity (Pa·s) | 2000 | 900 | 800 | 900 |

As evident from Table 1, the thermoplastic elastomer compositions produced in Examples 1-1 and 1-2 have improved high temperature flowability, strength, and tensile properties such as elongation while retaining the excellent flexibility compared to the thermoplastic elastomer compositions of Comparative Examples 1 and 2 containing no ethylene-propylene copolymer.

### 1-3. Preparation of thermoplastic elastomer composition (2)

### (Examples 1-3 to 1-6 and Comparative Examples 1-3 and 1-4)

First, to a pressurized kneader adjusted to 200°C were added 80.0 g of maleinized EPM and 0.8 g of an antiaging agent (Irganox1010 manufactured by NAGASE & CO., LTD.), and then, ethylene-propylene rubber (P0080K manufactured by Mitsui Chemicals, Inc.) or ethylene-propylene copolymer B1 (M142E manufactured by Prime Polymer Co., Ltd.) of the amount shown in parts by mass in Table 2. The mixture was kneaded for 5 minutes. After the kneading, polybutene (HV-100 manufactured by Nippon Petrochemicals Co., Ltd.) and styrene thermoplastic elastomer 1 (Septon 2006 having a styrene content of 30% by mass and a weight average molecular weight of 150,000 or higher manufactured by Kuraray Co., Ltd.) of the amount shown in parts by mass in Table 2 were added, and the mixture was kneaded for 10 minutes.

To the kneader were then added 4H-3-amino-1,2,4-triazole (ATA manufactured by Otsuka Chemical Co., Ltd.) and N-n-octyl aminoethanol (NYMEEN C-201 manufactured by NOF Corporation), or trihydric alcohol (UNIOX G450 manufactured by NOF Corporation), and then, carbon black (manufactured by Nippon Steel Chemical Carbon Co., Ltd.) and calcium carbonate (manufactured by Maruo Calcium Co., Ltd.). The mixture was kneaded for 10 minutes to produce the thermoplastic elastomer composition. IR analysis confirmed that the products of Comparative Example 1-3 and Example 1-3 contained a thermoplastic elastomer having triazole ring and imino group incorporated therein, and the products of Comparative Example 1-4 and Examples 1-4 to 1-6 contained a thermoplastic elastomer wherein covalent bond had generated. 1-4. Evaluation of thermoplastic elastomer composition (2)

The resulting thermoplastic elastomer compositions were evaluated for their tensile properties, compression set, and viscosity by the procedure as described below. The results are shown in Table 2.

### (1) Tensile properties

The resulting thermoplastic elastomer compositions were evaluated for their 100% modulus (M₁₀₀) [MPa], 300% modulus (M₃₀₀) [MPa], breaking strength (T_{B}) [MPa], and elongation at break (E_{B}) [%] at room temperature (25°C) and 100°C by repeating the measurement procedure as described above.

The thermoplastic elastomer composition produced in Example 1-6 exhibited an elongation at break at 25°C of 170%, and the 300% modulus is indicated in Table 2 as "-".

### (2) Compression set (C-Set)

The thermoplastic elastomer compositions obtained were pressed at temperature of 200°C for 10 minutes to produce a sheet with a thickness of 2 mm. 7 sheets were stacked on top of one another and pressed at 200°C for 20 minutes to produce a cylindrical sample with the size of 29 mm (diameter) x 12.5 mm (thickness).

The cylindrical sample was compressed by 25% with a purpose-built jig, and this state was kept at 70°C for 22 hours. The compression set was then measured according to JIS K6262.

### (3) Viscosity

The resulting thermoplastic elastomer compositions were evaluated for their capillary viscosity by repeating the measurement procedure as described above.

**Table 2**

| | Comparative Example 1-3 | Comparative Example 1-4 | Example 1-3 | Example 1-4 | Example 1-5 | Example 1-6 |
|---|---|---|---|---|---|---|
| Maleinized EPM | 100 | 100 | 100 | 100 | 100 | 100 |
| Ethylene-propylene rubber Ethylene-propylene copolymer B1 | 100 | 100 | 100 | 100 | 200 | 300 |
| Polybutene | 30 | 30 | 30 | 30 | 30 30 | |
| Styrene thermoplastic elastomer 1 | 30 | 30 | 30 | 30 | 30 | 30 |
| Antiaging agent | 1 | 1 | 1 | 1 | 1 | 1 |
| Carbon black | 10 | 10 | 10 | 10 | 10 | 10 |
| Calcium carbonate | 50 | 50 | 50 | 50 | 50 | 50 |
| ATA | 0.7 | | 0.7 | | | |
| N-n-octylaminoethanol | 1.1 | | 1.1 | | | |
| Trihydric alcoho | | 2.1 | | 2.1 | 2.1 | 2.1 |
| Tensile properties (at 25°C) | | | | | | |
| M₁₀₀(MPa) | 1.4 | 1.4 | 2.1 | 2.1 | 2.4 | 3.1 |
| M₃₀₀(MPa) | 1.7 | 1.9 | 3.2 | 3.5 | 3.5 | - |
| T_{B}(MPa) | 2.5 | 2.6 | 4.4 | 4.6 | 6.1 | 5.0 |
| E_{B}(%) | 510 | 490 | 450 | 450 | 420 | 170 |
| Tensile properties (at 100°C) | | | | | | |
| M₁₀₀(MPa) | 0.12 | 0.12 | 0.62 | 0.62 | 0.62 | 0.65 |
| T_{B}(MPa) | 0.17 | 0.17 | 0.90 | 0.90 | 0.90 | 1.23 |
| E_{B}(%) | 170 | 170 | 250 | 250 | 250 | 130 |
| Compression set (%) | 61 | 49 | 60 | 47 | 50 | 82 |
| Capillary viscosity (Pa·s) | 1850 | 1850 | 1650 | 1650 | 1650 | 1450 |

As evident from Table 2, the thermoplastic elastomer compositions produced in Examples 1-3 to 1-6 has improved high temperature flowability, strength, and tensile properties such as elongation while retaining the excellent flexibility compared to the thermoplastic elastomer compositions of Comparative Examples 1-3 and 1-4 containing no ethylene-propylene copolymer.

### 2. Examples of the composition of the second aspect of the present invention

### 2-1. Preparation of thermoplastic elastomer composition

### (Examples 2-1 to 2-4 and Comparative Examples 2-1 to 2-3)

300.0 g of maleic anhydride-modified ethylene-propylene copolymer (MP-0620 manufactured by Mitsui Chemicals, Inc., hereinafter abbreviated as "maleinized EPM") was added to a pressurized kneader adjusted to 200°C, and the mixture was kneaded for 3 minutes. 2.5 g of 4H-3-amino-1,2,4-triazole (ATA manufactured by Otsuka Chemical Co., Ltd.) was added, and the mixture was kneaded for further 10 minutes to produce thermoplastic elastomer 1. IR analyses revealed that the product was a thermoplastic elastomer having triazole ring introduced therein.

Next, to 100 parts by mass of the resulting thermoplastic elastomer 1 were added a plasticizer and a styrene thermoplastic elastomer. The plasticizer used was paraffin oil (Diana Process Oil PW90 having a weight average molecular weight of 540 manufactured by Idemitsu Kosan Co. Ltd.) and it was added in the amount in terms of parts by mass shown in Table 3. The styrene thermoplastic elastomer used was one of SEPS (Septon 2006 having a styrene content of 30% by mass and a weight average molecular weight of at least 150,000 manufactured by Kuraray Co., Ltd.), SEEPS (Septon 4055 having a styrene content of 30% by mass and a weight average molecular weight of at least 150,000 manufactured by Kuraray Co., Ltd.), SEPS (Septon 2063 having a styrene content of 13% by mass and a weight average molecular weight of less than 100,000 manufactured by Kuraray Co., Ltd.) and SEPS (Septon 2002 having a styrene content of 30% by mass and a weight average molecular weight of less than 100,000 manufactured by Kuraray Co., Ltd.), and the styrene thermoplastic elastomer was used in the amount in terms of parts by mass shown in Table 3. The mixture was kneaded for 10 minutes until it became uniform to thereby produce thermoplastic elastomer composition. No styrene thermoplastic elastomer was used in Comparative Example 2-1.

### (Examples 2-5 to 2-7 and Comparative Examples 2-4 to 2-6)

First, 300.0 g of maleinized EPM1 was added to a kneader adjusted to 200°C, and the mixture was kneaded for 3 minutes. 1.0 g of N-n-octylaminoethanol (NYMEEN C-201 manufactured by NOF Corporation) was then added, and the mixture was kneaded for 5 minutes. 2.0 g of 4H-3-amino-1,2,4-triazole (ATA manufactured by Otsuka Chemical Co., Ltd.) was added, and the mixture was kneaded for 5 minutes to produce thermoplastic elastomer 2. IR analyses revealed that the product was a thermoplastic elastomer having triazole ring and imino group introduced therein.

Next, to 100 parts by mass of the resulting thermoplastic elastomer 2 were added a plasticizer and a styrene thermoplastic elastomer. The plasticizer used was paraffin oil (Diana Process Oil PW90 having a weight average molecular weight of 540 manufactured by Idemitsu Kosan Co. Ltd.) and it was added in the amount in terms of parts by mass shown in Table 3. The styrene thermoplastic elastomer used was one of SEPS (Septon 2006 having a styrene content of 30% by mass and a weight average molecular weight of at least 150,000 manufactured by Kuraray Co., Ltd.), SEEPS (Septon 4055 having a styrene content of 30% by mass and a weight average molecular weight of at least 150,000 manufactured by Kuraray Co., Ltd.), SEPS (Septon 2063 having a styrene content of 13% by mass and a weight average molecular weight of less than 100,000 manufactured by Kuraray Co., Ltd.) and SEPS (Septon 2002 having a styrene content of 30% by mass and a weight average molecular weight of less than 100,000 manufactured by Kuraray Co., Ltd.), and the styrene thermoplastic elastomer was used in the amount in terms of parts by mass shown in Table 3. The mixture was kneaded for 10 minutes until it became uniform to thereby produce thermoplastic elastomer composition. No styrene thermoplastic elastomer was used in Comparative Example 4.

### (Comparative Examples 2-7 to 2-9)

Next, to 100 parts by mass of EPDM were added a plasticizer and a styrene thermoplastic elastomer. The plasticizer used was paraffin oil (Diana Process Oil PW90 having a weight average molecular weight of 540 manufactured by Idemitsu Kosan Co. Ltd.) and it was added in the amount in terms of parts by mass shown in Table 3. The styrene thermoplastic elastomer used was SEPS (Septon 2006 having a styrene content of 30% by mass and a weight average molecular weight of at least 150,000 manufactured by Kuraray Co., Ltd.) or SEEPS (Septon 4055 having a styrene content of 30% by mass and a weight average molecular weight of at least 150,000 manufactured by Kuraray Co., Ltd.), and the styrene thermoplastic elastomer was used in the amount in terms of parts by mass shown in Table 3. The mixture was kneaded for 10 minutes until it became uniform to thereby produce thermoplastic elastomer composition. No styrene thermoplastic elastomer was used in Comparative Example 7.

### 2-2. Evaluation of thermoplastic elastomer composition

The resulting thermoplastic elastomer compositions were evaluated for their appearance, hardness, resistance to compression set, tensile properties, and recyclability by the procedure as described below. The results are shown in Table 3.

### (1) JIS-A hardness

The resulting thermoplastic elastomer compositions were evaluated for their JIS-A hardness by repeating the measurement procedure as described above.

### (2) Compression set (C-Set)

The resulting thermoplastic elastomer compositions were evaluated for their compression set by repeating the measurement procedure as described above.

### (3) Tensile properties

The thermoplastic elastomer compositions obtained were pressed at an elevated temperature of 180°C for 10 minutes to produce a sheet with a thickness of 2 mm.

No. 3 dumbbell test pieces were blanked out from this sheet, and tensile test was conducted according to JIS K6251 at a tensile rate of 500 mm/min to thereby measure 50% modulus (M₅₀) [MPa], 100% modulus (M₁₀₀) [MPa], 200% modulus (M₂₀₀) [MPa], 300% modulus (M₃₀₀) [MPa], 400% modulus (M₄₀₀) [MPa], breaking strength (T_{B}) [MPa], and elongation at break (E_{B}) [%] at room temperature.

### (4) Recyclability

The thermoplastic elastomer compositions obtained were pressed at temperature of 200°C for 10 minutes to produce a sheet with a thickness of 2 mm. The sheet was then cut into pieces and pressed again. The elastomers were evaluated for their recyclability by the number of pressing operations that could produce an integral seamless sheet.

In this evaluation, an integral seamless sheet could be produced 10 or more times with all of the thermoplastic elastomer compositions, and the recyclability was evaluated as "good".

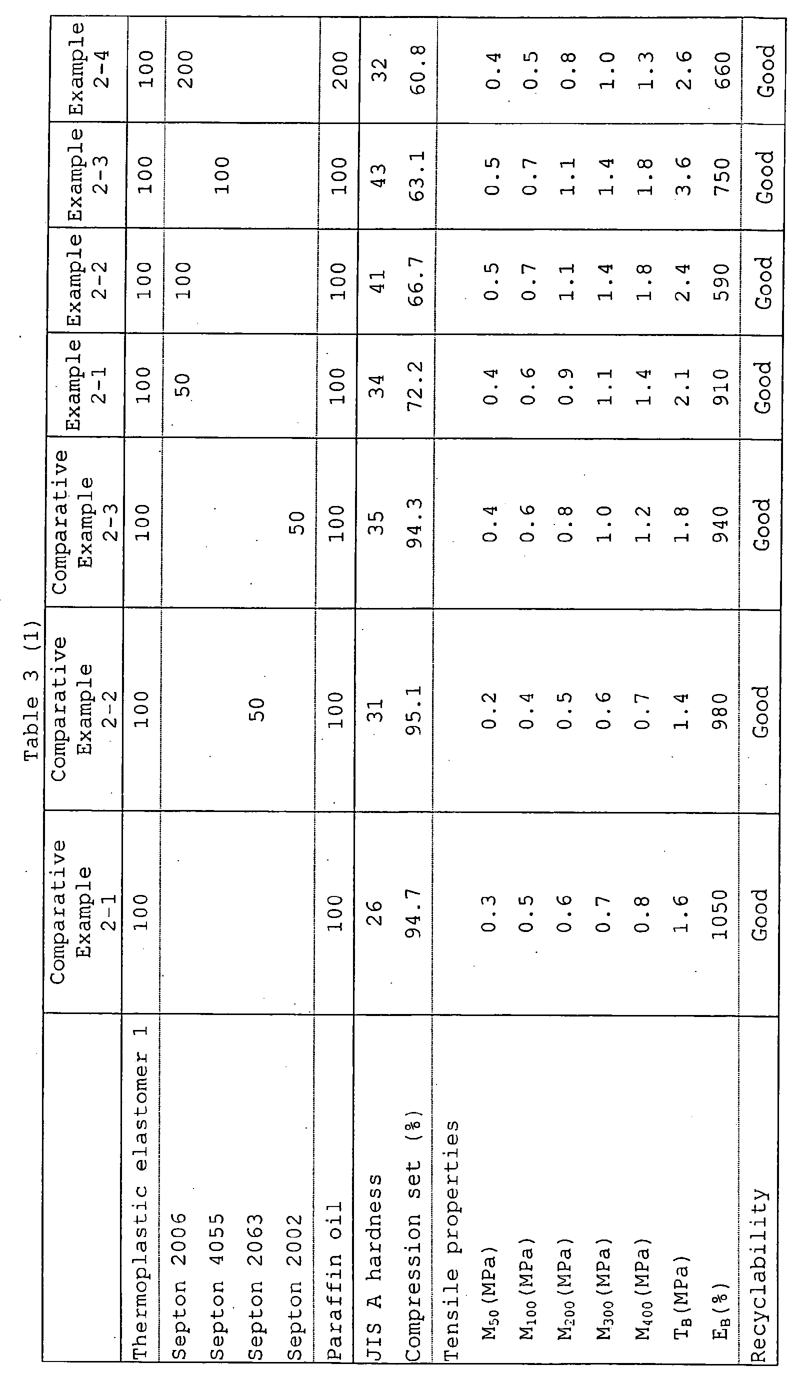

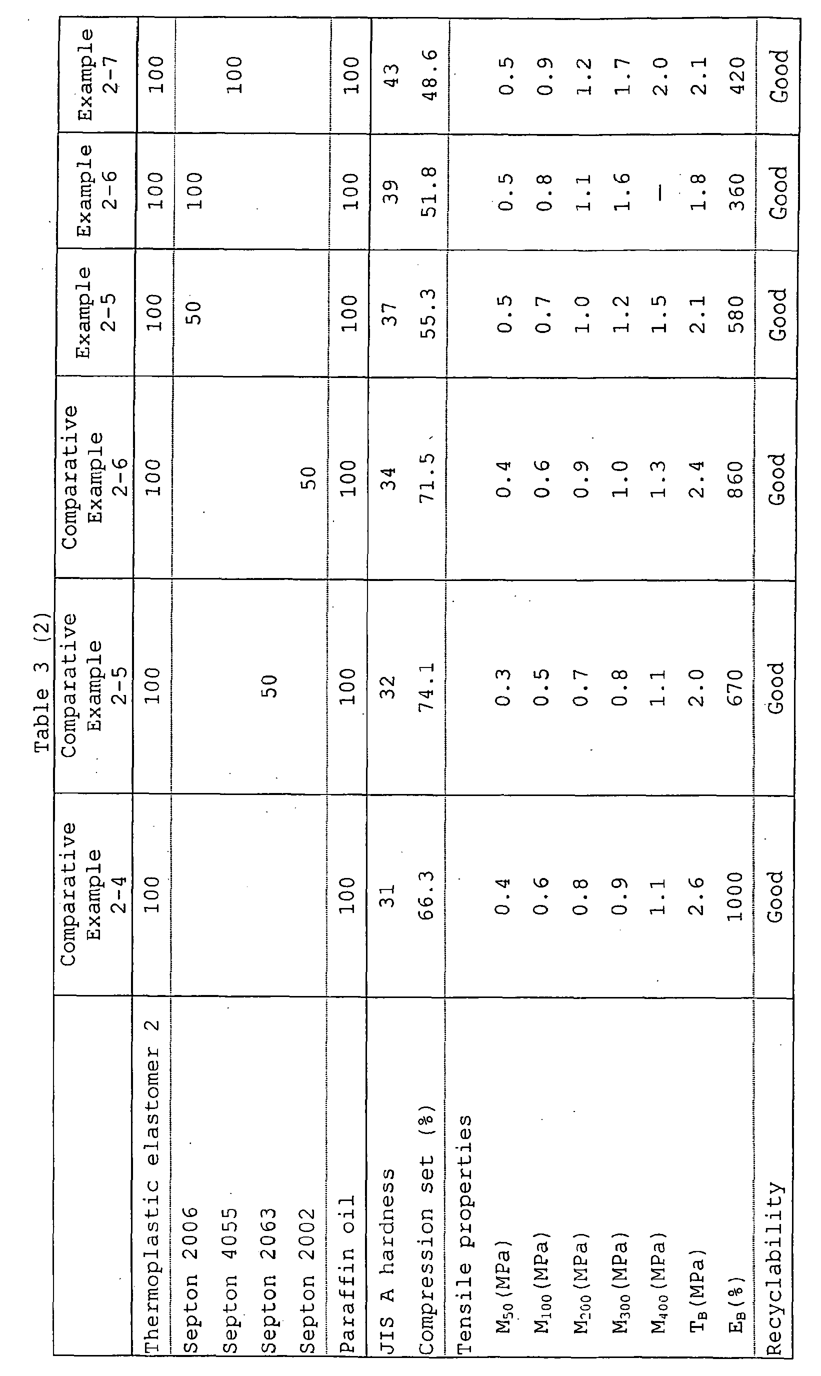

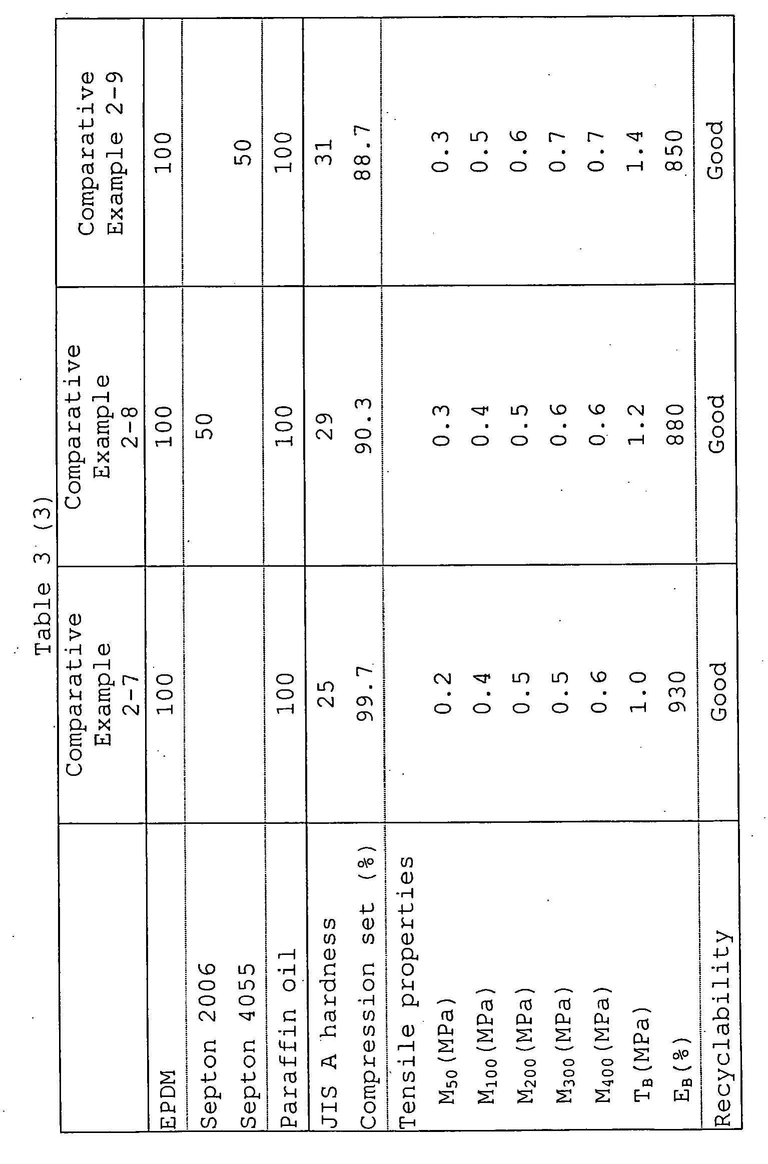

As evident from Table 3, the thermoplastic elastomer compositions produced in Examples 2-1 to 2-7 have improved tensile properties and resistance to compression set while retaining the excellent recyclability compared to the thermoplastic elastomer compositions of Comparative Examples 2-1 to 2-6 which are free from predetermined styrene thermoplastic elastomer of predetermined amount. In particular, the thermoplastic elastomer compositions produced in Examples 2-4 to 2-7 exhibit extremely improved resistance to compression set of as low as approximately 50%.

The thermoplastic elastomer compositions produced in Examples 2-1 to 2-7 exhibit remarkably improved resistance to compression set over the thermoplastic elastomer compositions of Comparative Examples 2-7 to 2-9 which are free from the thermoplastic elastomer (A), and in particular, as compared to the thermoplastic elastomer compositions of Comparative Examples 2-8 and 2-9 which contain predetermined styrene thermoplastic elastomer of predetermined amount.

## Claims

1. A thermoplastic elastomer composition comprising a thermoplastic elastomer (A) having a side chain having (a) at least one member selected from the group consisting of animinogroup,a nitrogen-containing heterocycle and a covalent crosslink site, and (b) a carbonyl-containing group, and an ethylene-propylene copolymer (B) comprising a propylene block and an ethylene-propylene block.

2. The thermoplastic elastomer composition according to claim 1, wherein the ethylene-propylene copolymer (B) contains 1 to 50% by mole of the propylene block.

3. The thermoplastic elastomer composition according to claim 1 or 2, wherein the propylene block is stereoregular.

4. The thermoplastic elastomer composition according to claim 3, wherein the propylene block is isotactic.

5. The thermoplastic elastomer composition according to any one of claims 1 to 4, wherein content of the ethylene-propylene copolymer (B) is 1 to 200 parts by mass in relation to 100 parts by mass of the thermoplastic elastomer (A).

6. The thermoplastic elastomer composition according to any one of claims 1 to 5, wherein the side chain of the thermoplastic elastomer (A) has a structure represented by the following formula (1): 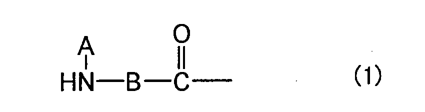 wherein A is an alkyl group containing 1 to 30 carbon atoms, an aralkyl group containing 7 to 20 carbon atoms, or an aryl group containing 6 to 20 carbon atoms; and B is a single bond, oxygen atom, amino group NR' (wherein R' is hydrogen atom or an alkyl group containing 1 to 10 carbon atoms), sulfur atom, or an organic group.

7. The thermoplastic elastomer composition according to claim 6, wherein the side chain containing the structure represented by the formula (1) has a structure represented by the following formula (2) or (3) which binds to the main chain at α or β position: 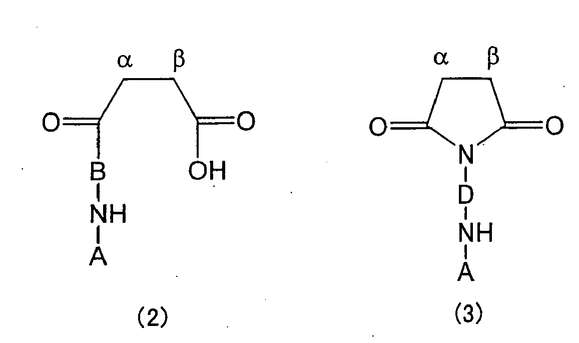 wherein A is an alkyl group containing 1 to 30 carbon atoms, an aralkyl group containing 7 to 20 carbon atoms, or an aryl group containing 6 to 20 carbon atoms; and B and D are independently a single bond, oxygen atom, amino group NR' (wherein R' is hydrogen atom or an alkyl group containing 1 to 10 carbon atoms), sulfur atom, or an organic group.

8. The thermoplastic elastomer composition according to any one of claims 1 to 5, wherein the side chain of the thermoplastic elastomer (A) contains the structure represented by the following formula (4): 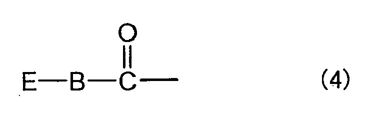 wherein E is a nitrogen-containing heterocycle, and B is a single bond, oxygen atom, amino group NR' (wherein R' is hydrogen atom or an alkyl group containing 1 to 10 carbon atoms), sulfur atom, or an organic group.

9. The thermoplastic elastomer composition according to claim 8, wherein the side chain containing the structure represented by the formula (4) has a structure represented by the following formula (5) or (6) which binds to the main chain at α or β position: 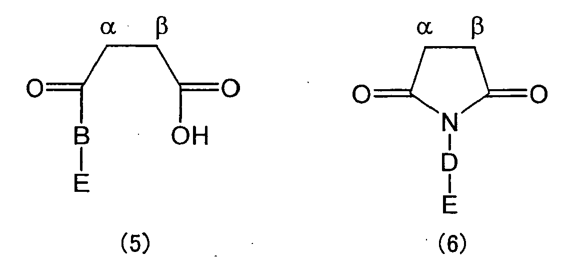 wherein E is a nitrogen-containing heterocycle, and B and D are independently a single bond, oxygen atom, amino group NR' (wherein R' is a hydrogen atom or an alkyl group containing 1 to 10 carbon atoms), sulfur atom, or an organic group.

10. The thermoplastic elastomer composition according to any one of claims 1 to 9, wherein, in the covalent crosslink site, a crosslink can be formed by at least one bond selected from the group consisting of amide, ester, lactone, urethane, ether, thiourethane, and thioether.

11. The thermoplastic elastomer composition according to any one of claims 1 to 9, wherein, in the covalent crosslink site, a crosslink is formed by at least one bond selected from the group consisting of amide, ester, lactone, urethane, ether, thiourethane, and thioether.

12. The thermoplastic elastomer composition according to claim 11, wherein the crosslink in the covalent crosslink site has at least one structure represented by any one of the following formulae (7) to (9): 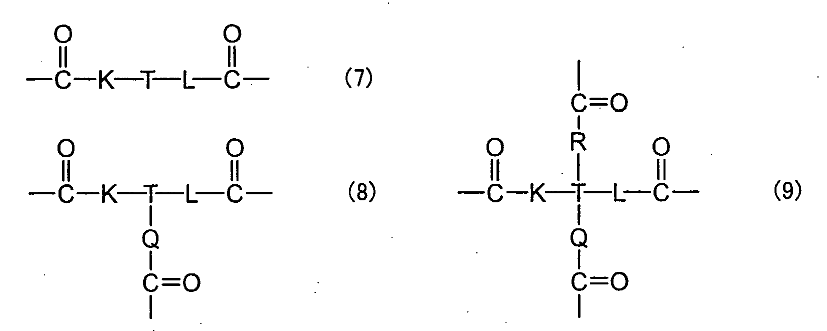 wherein K, L, Q, and R are independently a single bond, oxygen atom, amino group NR' (wherein R' is a hydrogen atom or an alkyl group containing 1 to 10 carbon atoms), sulfur atom, or an organic group, and T is a hydrocarbon group which may contain an oxygen atom, sulfur atom or nitrogen atom and which may be branched.

13. The thermoplastic elastomer composition according to claim 12, wherein the crosslink in the covalent crosslink site has at least one structure represented by any one of the following formulae (10) to (12) which binds to the main chain at α or β position: 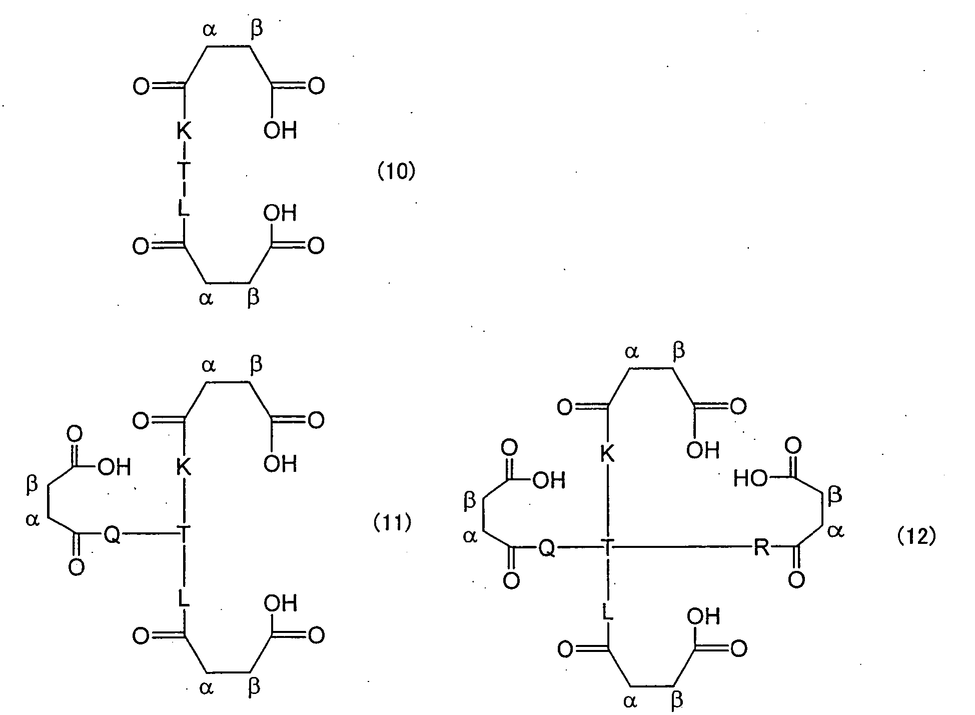 wherein K, L, Q, and R are independently a single bond, oxygen atom, amino group NR' (wherein R' is ahydrogenatom or an alkyl group containing 1 to 10 carbon atoms), sulfur atom, or an organic group, and T is a hydrocarbon group which may contain an oxygen atom, sulfur atom or nitrogen atom and which may be branched.

14. The thermoplastic elastomer composition according to any one of claims 1 to 13, further comprising a styrene thermoplastic elastomer.

15. The thermoplastic elastomer composition according to claim 14, wherein content of the styrene thermoplastic elastomer is 1 to 500 parts by mass in relation to 100 parts by mass of the thermoplastic elastomer (A).

16. The thermoplastic elastomer composition according to any one of claims 1 to 15, further comprising a filler.

17. The thermoplastic elastomer composition according to claim 16, wherein content of the filler is 1 to 200 parts by mass in relation to 100 parts by mass of the thermoplastic elastomer (A).

18. A thermoplastic elastomer composition comprising a thermoplastic elastomer (A) having a side chain having (a) at least one member selected from the group consisting of an imino group, a nitrogen-containing heterocycle and a covalent crosslink site, and (b) ^{a} carbonyl-containing group; a styrene thermoplastic elastomer having a weight average molecular weight of at least 100,000; and a plasticizer.

19. The thermoplastic elastomer composition according to claim 18, wherein the thermoplastic elastomer (A) has a side chain containing an imino group and/or a nitrogen-containing heterocycle, and a carbonyl-containing group.

20. The thermoplastic elastomer composition according to claim 18, wherein the side chain contains an imino group and a carbonyl-containing group.

21. The thermoplastic elastomer composition according to claim 18, wherein the side chain contains an imino group, a nitrogen-containing heterocycle, and a carbonyl-containing group.

22. The thermoplastic elastomer composition according to any one of claims 18 to 21, wherein the side chain has a structure represented by the following formula (1): 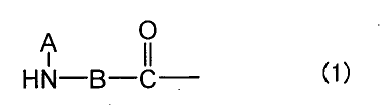 wherein A is an alkyl group containing 1 to 30 carbon atoms, an aralkyl group containing 7 to 20 carbon atoms, or an aryl group containing 6 to 20 carbon atoms; and B is a single bond, oxygen atom, amino group NR' (wherein R' is a hydrogen atom or an alkyl group containing 1 to 10 carbon atoms), sulfur atom, or an organic group.

23. The thermoplastic elastomer composition according to claim 22, wherein the side chain containing the structure represented by the formula (1) has a structure represented by the following formula (2) or (3) which binds to the main chain at α or β position: 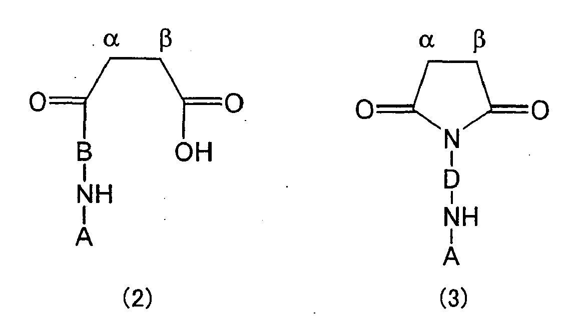 wherein A is an alkyl group containing 1 to 30 carbon atoms, an aralkyl group containing 7 to 20 carbon atoms, or an aryl group containing 6 to 20 carbon atoms; and B and D are independently a single bond, oxygen atom, amino group NR' (wherein R' is a hydrogen atom or an alkyl group containing 1 to 10 carbon atoms), sulfur atom, or an organic group.

24. The thermoplastic elastomer composition according to claim 19 or 21, wherein the side chain contains a structure represented by the following formula (4): 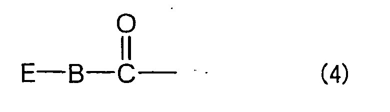 wherein E is a nitrogen-containing heterocycle, and B is a single bond, oxygen atom, amino group NR' (wherein R' is a hydrogen atom or an alkyl group containing 1 to 10 carbon atoms), sulfur atom, or an organic group.

25. The thermoplastic elastomer composition according to claim 24, wherein the side chain containing the structure represented by the formula (4) has a structure represented by the following formula (5) or (6) which binds to the main chain at α or β position: 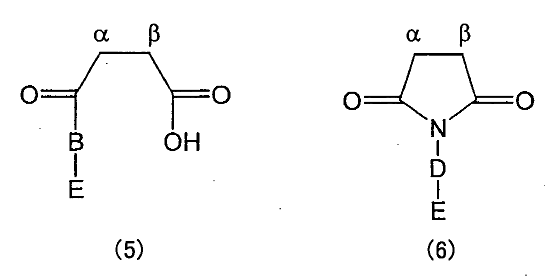 wherein E is a nitrogen-containing heterocycle, and B and D are independently a single bond, oxygen atom, amino group NR' (wherein R' is a hydrogen atom or an alkyl group containing 1 to 10 carbon atoms), sulfur atom, or an organic group.

26. The thermoplastic elastomer composition according to claim 19, 21, 24 or 25, wherein the nitrogen-containing heterocycle is a five-membered or six-membered ring.

27. The thermoplastic elastomer composition according to claim 26, wherein the nitrogen-containing heterocycle is a triazole ring, thiadiazole ring, pyridine ring, thiazole ring, imidazole ring, or hydantoin ring.

28. The thermoplastic elastomer composition according to claim 26, wherein the side chain containing the structure represented by the formula (4) has a structure represented by the following formula (7), the following formula (8) or (9), or the following formula (10): 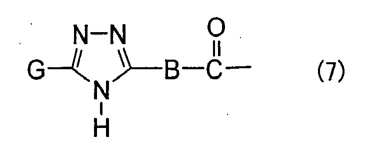 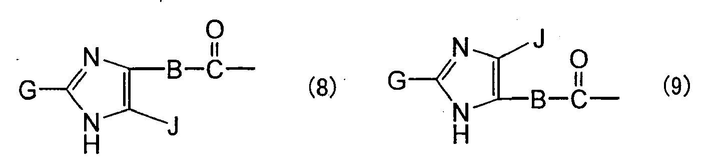 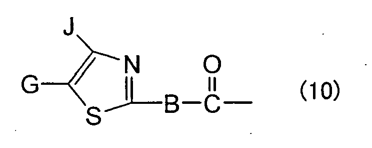 wherein B is a single bond, oxygen atom, amino group NR' (wherein R' is a hydrogen atom or an alkyl group containing 1 to 10 carbon atoms), sulfur atom, or an organic group, and G and J are independently a hydrogen atom, an alkyl group containing 1 to 30 carbon atoms, an aralkyl group containing 7 to 20 carbon atoms, or an aryl group containing 6 to 20 carbon atoms.

29. The thermoplastic elastomer composition according to claim 28, wherein the side chain containing the structure represented by the formula (4) has a structure represented by the following formula (11) or (12), any one of the following formulae (13) to (16), or the following formula (17) or (18) which binds to the main chain at α or β position: 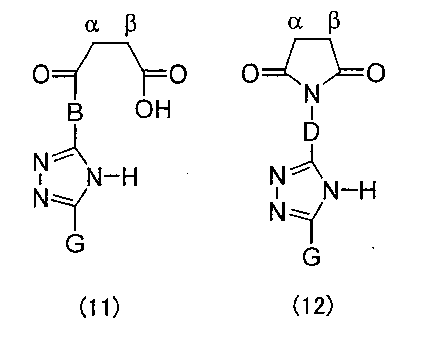 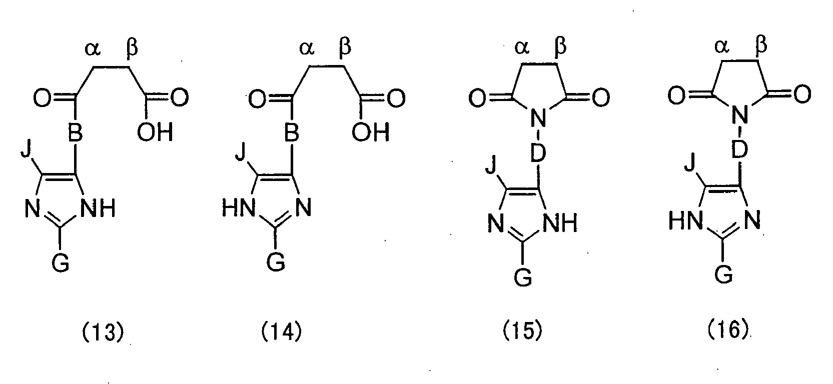 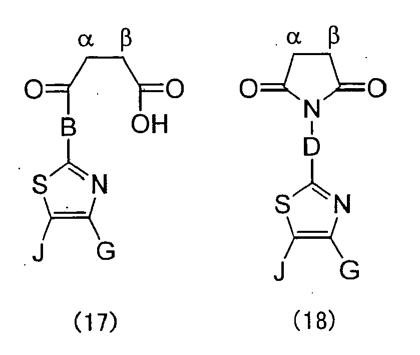 wherein B and D are independently a single bond, oxygen atom, amino group NR' (wherein R' is a hydrogen atom or an alkyl group containing 1 to 10 carbon atoms), sulfur atom, or an organic group, and G and J are independently a hydrogen atom, an alkyl group containing 1 to 30 carbon atoms, aralkyl group containing 7 to 20 carbon atoms, or an aryl group containing 6 to 20 carbon atoms.

30. The thermoplastic elastomer composition according to any one of claims 18 to 29, wherein the thermoplastic elastomer (A) has another side chain which has a covalent crosslink site, and in the covalent crosslink site, crosslink can be formed by at least one bond selected from the group consisting of amide, ester, lactone, urethane, ether, thiourethane, and thioether.

31. The thermoplastic elastomer composition according to any one of claims 18 to 29, wherein the thermoplastic elastomer (A) has another side chain which has acovalent crosslink site, and in the covalent crosslink site, crosslink is formed by at least one bond selected from the group consisting of amide, ester, lactone, urethane, ether, thiourethane, and thioether.

32. The thermoplastic elastomer composition according to claim 31, wherein the crosslink in the covalent crosslink sitecontainsa tertiary amino group.

33. The thermoplastic elastomer composition according to claim 31 or 32, wherein the crosslink in the covalent crosslink site has at least one structure represented by any one of the following formulae (19) to (21): 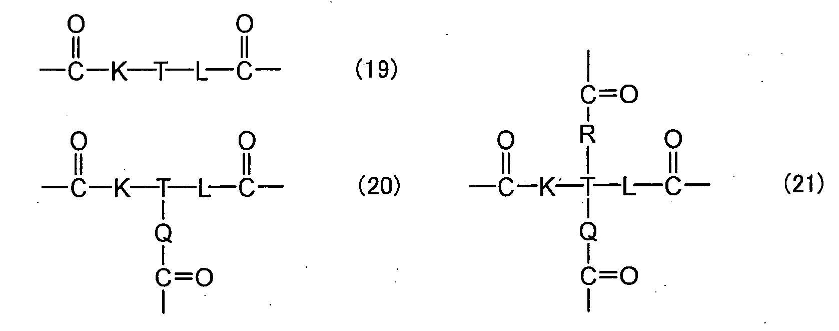 wherein K, L, Q, and R are independently a single bond, oxygen atom, amino group NR' (wherein R' is ahydrogenatom or an alkyl group containing 1 to 10 carbon atoms), sulfur atom, or an organic group, and T is a hydrocarbon group which may contain an oxygen atom, sulfur atom or nitrogen atom and which may be branched.

34. The thermoplastic elastomer composition according to claim 33, wherein the crosslink in the covalent crosslink site has at least one structure represented by any one of the following formulae (22) to (24) which binds to the main chain at α or β position: 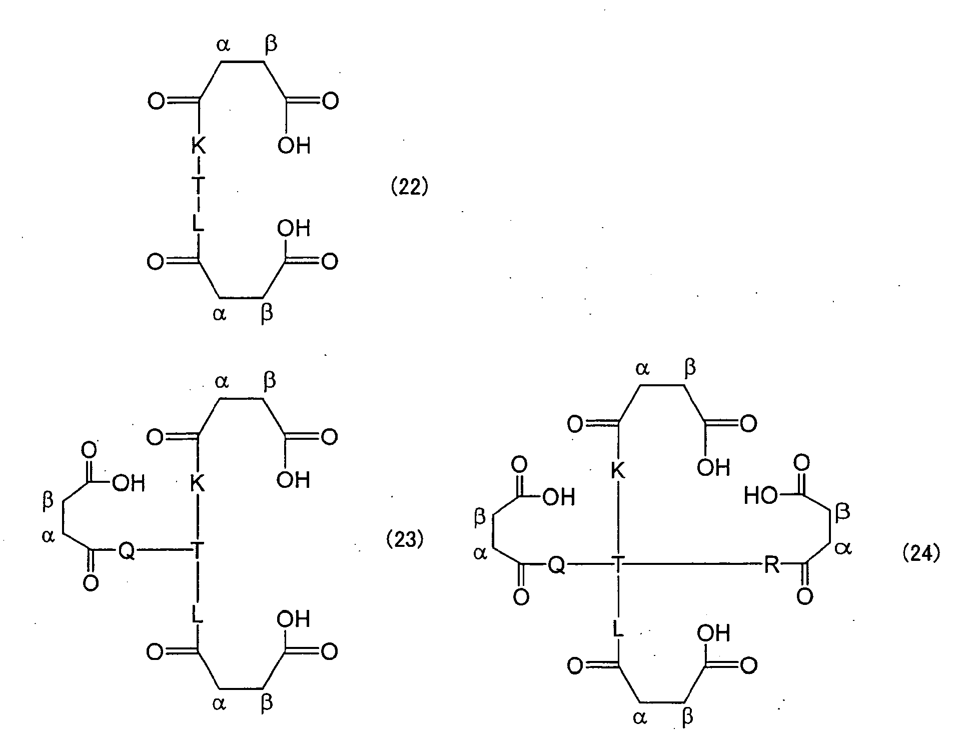 wherein K, L, Q, and R are independently a single bond, oxygen atom, amino group NR' (wherein R' is a hydrogen atom or an alkyl group containing 1 to 10 carbon atoms), sulfur atom, or an organic group, and T is a hydrocarbon group which may contain an oxygen atom, sulfur atom or nitrogen atom and which may be branched.

35. The thermoplastic elastomer composition according to claim 33 or 34, wherein T in any one of the formulae (19) to (24) contains a tertiary amino group.

36. The thermoplastic elastomer composition according to any one of claims 31 to 35, wherein crosslink in the covalent crosslink site is formed by a reaction of a cyclic acid anhydride group with hydroxy group, or amino group and/or imino group.

37. The thermoplastic elastomer composition according to any one of claims 18 to 36, wherein styrene content of the styrene thermoplastic elastomer is 10 to 60% by mass.

38. The thermoplastic elastomer composition according to any one of claims 18 to 37, wherein content of the styrene thermoplastic elastomer is 1 to 500 parts by mass in relation to 100 parts by mass of the thermoplastic elastomer (A).

39. The thermoplastic elastomer composition according to any one of claims 18 to 38, wherein content of the plasticizer is 1 to 500 parts by mass in relation to 100 parts by mass of the thermoplastic elastomer (A).
